# EUROPEAN PATENT SPECIFICATION

(11) **EP 2 570 909 B1**
(45) Date of publication and mention of the grant of the patent: **16.03.2016**
(21) Application number: 12184542.4
(22) Date of filing: 14.09.2012
(51) Int. Cl.: G06F 3/0488, H04M 1/67

(54) **Electronic device, synchronization method thereof and computer program product**
Elektronische Vorrichtung, Synchronisationsverfahren dafür und Computerprogrammprodukt
Dispositif électronique, procédé de synchronisation et produit de programme informatique

(30) Priority: 15.09.2011 US 201161535350 P; 03.11.2011 US 201161554978 P; 24.02.2012 US 201261602603 P; 24.02.2012 US 201261602595 P; 13.09.2012 US 201213615522
(43) Date of publication of application: 20.03.2013
(73) Proprietor: HTC Corporation, Taoyuan City 330 (TW)
(72) Inventor: Liu Ching-Tung, Taoyuan City Taoyuan County 330 (TW); Wang Hsin-Wen, Taoyuan City Taoyuan County 330 (TW)
(74) Representative: 2K Patentanwälte Blasberg Kewitz & Reichel

(56) References cited:
- US-A1- 2007 150 842
- US-A1- 2007 157 089
- US-A1- 2009 006 991
- US-A1- 2010 269 040
- US-A1- 2010 306 718
- US-A1- 2011 041 102

## Description

### BACKGROUND

### Field of the Invention

The invention relates to a synchronization method for an electronic device, and an electronic device and a computer program product using the same. Particularly, the invention relates to a method for synchronizing displayed content of an electronic device in different states, and an electronic device and a computer program product using the same.

### Description of Related Art

With development of technology, in a current information society, people increasingly depend on electronic products. To cope with a demand of high working frequency, high efficiency, and features of lightness, slimness, shortness and smallness of the electronic products, utilization of various portable electronic devices such as notebook personal computers (PC), mobile phones, personal digital assistants (PDA), smart phones, pocket PC and tablet PC, etc. becomes popular. However, regarding the portable mobile device requiring features of lightness, slimness, shortness and smallness, a size thereof is strictly limited, so that a touch screen technique is developed to integrate a keyboard with a screen to serve as an input interface of the portable electronic device, so as to save cost of a conventional keyboard and an area occupied by the conventional keyboard.

From US 2009/006991 A1 there is known a method for unlocking a touch screen device in an idle mode. An area or region displayed on a screen of the device in the idle mode is contacted or activated to reveal at least one application icon associated with an active/unlocked state of the device. The region is moved, expanded or dragged to an edge of the device to change a state of the device to an active/unlocked mode and activate the revealed application.

US 2011/041102 A1 discloses a mobile terminal and a method for controlling the same, which facilitates diverse functions thereof to be registered in a touch gesture and functions, information and menu icons registered in the touch gesture to be arranged and displayed adjacent to the input touch gesture, when the touch gesture is inputted on the touchscreen. In another aspect, a mobile terminal and a method for controlling the same are disclosed, which facilitates a terminal to be used in further consideration of user's convenience. According to at least one of embodiments of the present invention.

US 2007/157089 A1 discloses a portable electronic device which displays a plurality of icons (e.g., graphical objects) in a region in a touch-sensitive display; detects a predefined user action, with respect to the touch-sensitive display, for initiating a predefined user interface reconfiguration process; and varies positions of one or more icons in the plurality of icons in response to detecting the predefined user action. The varying includes varying the positions of the one or more icons about respective average positions.

Although it is quite convenient to operate the electronic device through the touch screen, a user may inadvertently touch a screen key displayed on the touch screen to execute a specific function, for example, a call function of the electronic device by accident. Therefore, the mobile device has a user-interface lock state to prevent the user from miss-touching the touch screen to activate an unnecessary function. In other words, when the user does not need to operate the electronic device, the user can manually set the electronic device to a user-interface lock state, so as to lock an input function of the touch screen. Alternatively, when a non-operation time of the electronic device reaches a predetermined value, the user-interface lock state is automatically activated to prevent the situation of miss-touching.

Generally, a background presented by the electronic device in the user-interface lock state is a single picture file, and even though the user selects a different picture file according to his preference, it still looks dull to only use the picture as a background frame, and a usage fun is not effectively improved.

### SUMMARY

The invention provides a synchronization method of an electronic device with a touch screen, according to claim 1. The method includes adding a first shortcut icon (2010, 2020, 2030) corresponding to a first application to a launch bar (2040) so as to_display the first shortcut icon corresponding to the first application on the launch bar on the touch screen while the electronic device is in a user-interface unlock state, and synchronously displaying a first function image of the first shortcut icon corresponding to the first application on the touch screen while the electronic device is in a user-interface lock state.

The invention provides an electronic device including a touch screen, a memory, one or more processing units and one or more programs, according to claim 8. The program is stored in the memory, and the processing unit executes one or more instructions of the program, where the instructions includes the steps of adding a first shortcut icon (2010, 2020, 2030) corresponding to a first application to a launch bar (2040) so as to display the first shortcut icon corresponding to the first application on the launch bar on the touch screen while the electronic device is in a user-interface unlock state, and synchronously displaying a first function image of the first shortcut icon corresponding to the first application on the touch screen while the electronic device is in a user-interface lock state.

The invention provides a computer program product, which includes a computer readable storage medium, according to claim 15. The computer readable storage medium records one or more instructions. After the instructions is loaded to an electronic device, following steps are executed. A first shortcut icon corresponding to a first application on a launch bar on the touch screen is displayed while the electronic device is in a user-interface unlock state, and a first function image of the first shortcut icon corresponding to the first application is displayed on the touch screen while the electronic device is in a user-interface lock state.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of an electronic device according to an embodiment of the present invention.
FIG. 2 is a flow chart of a method of controlling an electronic device according to an embodiment of the present invention.
FIG. 3 is a flow chart of a method of controlling an electronic device according to another embodiment of the present invention.
FIGs. 4A-4D are schematic views illustrating the visual output while controlling an electronic device according to an embodiment of the invention.
FIGs. 5A-5D are schematic views illustrating the visual output while controlling an electronic device according to another embodiment of the invention.
FIGs. 6A-6C are schematic views illustrating the visual output while controlling an electronic device according to still another embodiment of the invention.
FIG. 7 is a block diagram of an electronic device according to an embodiment of the present invention.
FIG. 8 is a flow chart of a method of controlling an electronic device according to an embodiment of the present invention.
FIGs. 9A-9D, 10, 11, 12A-12C, 13A-13H, 14A-14C are schematic views illustrating the visual output while controlling an electronic device in the user-interface lock state according to several embodiments of the invention.
FIGs. 15-19 are schematic views illustrating a ring displayed on the touch screen while an electronic device is in the user-interface lock state according to other embodiments of the invention.
FIGs. 20, 22 and 24 are schematic views illustrating a home screen of an electronic device according to embodiments of the invention.
FIGs. 21, 23 and 25 are schematic views illustrating a lock screen of an electronic device according to embodiments of the invention.
FIG. 26 is a block diagram of an electronic device according to an embodiment of the invention.
FIG. 27 is a flowchart illustrating a method for providing a background of a locked screen according to an embodiment of the invention.
FIG. 28A is a schematic diagram of a background corresponding to a background setting style of application shortcut according to an embodiment of the invention.
FIG. 28B is a schematic diagram of a background corresponding to a background setting style of application shortcut according to another embodiment of the invention.
FIG. 28C is a schematic diagram of a background corresponding to no background setting style is being selected according to an embodiment of the invention.
FIG. 28D is a flowchart illustrating a method of controlling an electronic device according to an embodiment of the invention.
FIG. 29A is a schematic diagram of a background corresponding to a background setting style of contacts according to an embodiment of the invention.
FIG. 29B is a schematic diagram of a background corresponding to a background setting style of contacts according to an embodiment of the invention.
FIG. 29C is a schematic diagram of a background corresponding to a background setting style of social network service according to an embodiment of the invention.
FIG. 29D is a schematic diagram of a background corresponding to a background setting style of social network service according to an embodiment of the invention.
FIG. 30A is a schematic diagram of a background corresponding to a background setting style of gallery according to an embodiment of the invention.
FIG. 30B is a schematic diagram of a background corresponding to a background setting style of gallery according to an embodiment of the invention.
FIG. 30C is a schematic diagram of a background corresponding to a background setting style of gallery according to an embodiment of the invention.
FIG. 30D is a schematic diagram of a background corresponding to a background setting style of gallery according to an embodiment of the invention.
FIG. 31A is a schematic diagram of a background corresponding to a background setting style of weather information according to an embodiment of the invention.
FIG. 31B is a schematic diagram of a background corresponding to a background setting style of weather information according to an embodiment of the invention.
FIG. 32A is a schematic diagram of a background corresponding to a background setting style of stock information according to an embodiment of the invention.
FIG. 32B is a schematic diagram of a background corresponding to a background setting style of stock information according to an embodiment of the invention.
FIG. 33 is a schematic diagram of a background corresponding to a background setting style of virtual clock according to an embodiment of the invention.
FIGs 34 and 35 is a schematic diagram of a background corresponding to the background setting style of contacts according to an embodiment of the invention.
FIG. 36 is a schematic diagram of a message editing screen according to an embodiment of the invention.
FIG. 37 is a schematic diagram of a personalized menu according to an embodiment of the invention.
FIG. 38 is a schematic diagram of a lock screen preview according to an embodiment of the invention.
FIG. 39 is a schematic diagram of a group selection screen according to an embodiment of the invention.
FIG. 40 is a schematic diagram of a group list screen according to an embodiment of the invention.
FIG. 41 is a schematic diagram of a contacts list according to an embodiment of the invention.
FIG. 42 is a schematic diagram of a contact card according to an embodiment of the invention.
FIG. 43 is a schematic diagram of a action define screen according to an embodiment of the invention.
FIG. 44 is a schematic diagram of a background corresponding to the background setting style of note according to an embodiment of the invention.
FIG. 45 is a schematic diagram of a background corresponding to the background setting style of task according to another embodiment of the invention.
FIG. 46 is a schematic diagram of a task reminder according to an embodiment of the invention.
FIG. 47 is a flow chart of a synchronization method of an electronic device according to an embodiment of the present invention.

### DETAILED DESCRIPTION OF DISCLOSED EMBODIMENTS

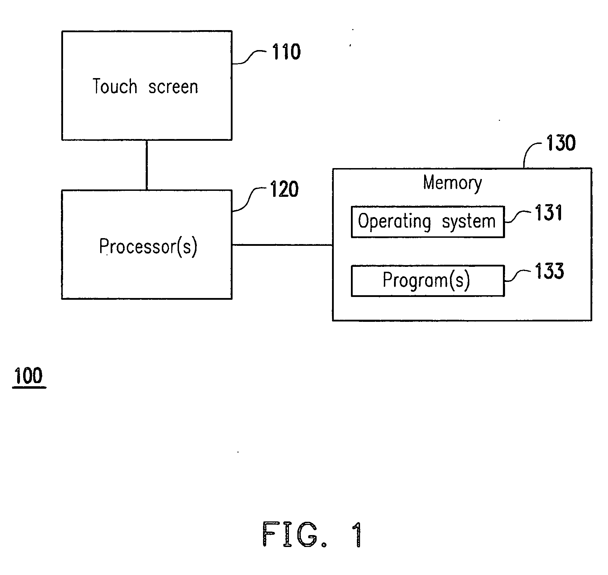

FIG. 1 is a block diagram of an electronic device according to an embodiment of the present invention. Referring to FIG. 1, the electronic device 100 includes a touch screen 110, one or more processors 120, and a memory 130. The electronic device 100 is, for example, a mobile phone, a smart phone, a personal digital assistant (PDA), a laptop, a tablet personal computer (PC), or a digital camera, the present invention is not limited thereto.

The touch screen 110 may be a resistive touch screen, a capacitive touch screen, an optical touch screen, or a magnetic touch screen, which is not limited by the present invention. The touch screen 110 is used as an input and output interface for the electronic device 100. That is, the touch screen 110 is configured to display different visual output when using the electronic device 100, and to receive different touch operations from a user. In which, the visual output may be the operating result and/or the operation image such as the home screen image, the lock screen image, or the graphical user interface of applications. While the electronic device 100 is in operation, movement of one or more objects on or near the touch screen 110 can be detected, and the corresponding signals are transmitted to the one or more processors 120 to perform the related action on the electronic device 100, then the generated visual output is displayed on the touch screen 110.

The one or more processors 120 may be a central processing unit (CPU), which is configured to run various software programs and/or instruction sets stored in the memory 130 to perform different functions for the electronic device 100 and to process data after the electronic device 100 is powered on.

The memory 130 may be an internal storage unit such as a random access memory or a non-volatile memory (e.g., a flash memory, or a magnetic disk storage device). The memory 130 may also be an external storage unit such as Secure Digital (SD) card, a SIM card, or other storage media which can be externally connected to the electronic device 100. The memory 130 may further be a networked online storage that can be accessed through a communication network by a network component (not shown) of the electronic device 100.

In the present embodiment, at least an operating system 131, and one or more programs 133 are stored in the memory 130.

The operating system 131 includes various software components and/or drivers and is used for managing a general operation of the electronic device 100. For example, the operating system 131 provides.a user interface for users to interact with the electronic device 100, manages applications that are running on the electronic device 100, and manages files stored in the electronic device 100.

The one or more programs 133 comprise instructions to be executed by the one or more processors 120. To be specific, the one or more processors 120 run the one or more programs 133 to perform a method of controlling the electronic device 100 of the present embodiment. The controlling method of the present embodiment is described later with reference of figures.

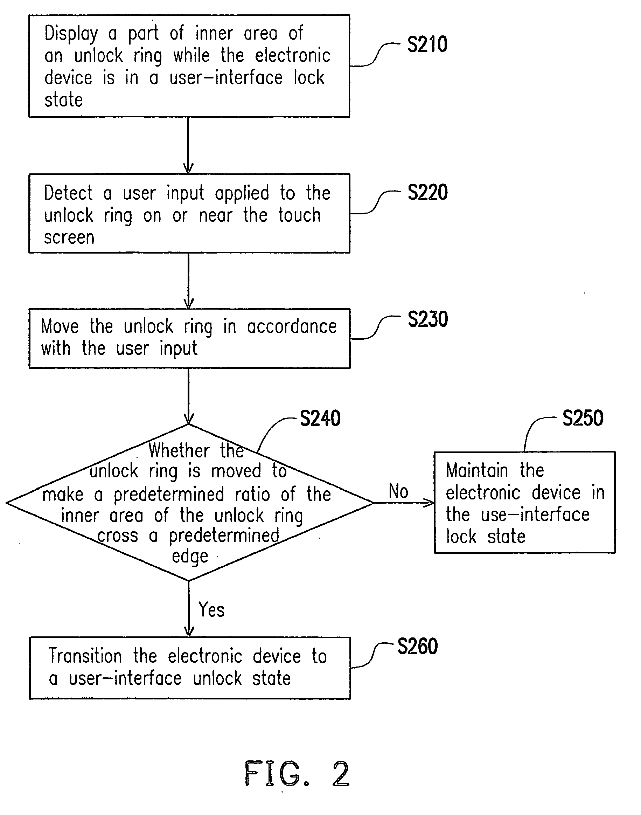

Below, the operation of the electronic device 100 will be described in detail with reference to another embodiment of the invention. FIG 2 is a flow chart of a method of controlling an electronic device according to an embodiment of the present invention. Please refer to Fig. 1 and Fig. 2.

In the present embodiment, the electronic device 100 is set to a user-interface lock state. To be specific, the electronic device 100 may have a plurality of operation states including the user-interface lock state and a user-interface unlock state. In the user-interface lock state, the electronic device 100 is in operation but ignores most user input. That is, the electronic device 100 in the user-interface lock state may only respond to a predefined set of user inputs such as input that corresponds to an attempt to switch the electronic device 100 to the user-interface unlock state.

On the other hand, while the electronic device 100 is in the user-interface unlock state, the electronic device 100 can be operated by the user normally. That is, general functions supported by the electronic device 100 can be invoked, and all kinds of user input from the touch screen 110 or the other input device (e.g., a hardware button, a key, or a scroll wheel) can be responded by the electronic device 100.

In step S210, a part of inner area of an unlock ring is displayed on the touch screen 110 while the electronic device 100 is in the user-interface lock state. To be specific, the unlock ring is formed by two geometric patterns in which one geometric pattern is wholly contained by the other one, the area of the smaller geometric pattern is the inner area of the unlock ring, and a part of the inner area is invisible on the touch screen 110. In the present embodiment, the unlock ring has a circular shape (i.e., a circular unlock ring). However, in another embodiment, the unlock ring may have a square shape, a rectangle shape, a rhombus shape, an elliptic shape, a star-shape, a heart shape, or a polygon shape. Moreover, since the unlock ring is formed by two geometric patterns, the type of two geometric patterns may be identical or different. That is to say, the look of the unlock ring is not limited in the present invention.

Next, in step S220, a user input applied to the unlock ring on or near the touch screen 110 is detected. The user input is, for example, an object contact on or near the touch screen 110 close to the display position of the unlock ring.

As long as the user input can be detected continuously, in step S230, the unlock ring is moved in accordance with the user input. That is, the display position of the unlock ring is changed in accordance with the movement of the user input, and the visual feedback is provided to the user through the touch screen 110.

Once the user input is terminated, in step S240, it is determined whether the unlock ring is moved to make a predetermined ratio of the inner area of the unlock ring cross a predetermined edge. In the present embodiment, the predetermined edge is an edge of the display area of the touch screen 110. That is, the predetermined edge may be a physical edge of the touch screen 110. In another embodiment, the predetermined edge may be an edge of an application window, an edge of a dialog box, or any virtual edge displayed on the touch screen 110.

If the unlock ring is not moved to make the predetermined ratio of the inner area of the unlock ring cross the predetermined edge, in step S250, the electronic device 100 maintains in the use-interface lock state. For example, it is assumed that the predetermined ratio is 100%. The unlock ring is moved in accordance with the detected user input, and if not all of the inner area of the unlock ring clear the predetermined edge at the time of the termination of the user input, the electronic device 100 remains in the use-interface lock state.

However, if the unlock ring is moved to make the predetermined ratio of the inner area of the unlock ring cross the predetermined edge, in step S260, the electronic device 100 transitions to a user-interface unlock state. Assuming that the predetermined ratio is 100%, the unlock ring is moved in accordance with the detected user input, and the electronic device 100 remains in the use-interface lock state until the user input is terminated while all of the inner area of the unlock ring clear the predetermined edge. Furthermore, in the present embodiment, the unlock ring is zoomed in on the touch screen 110 during the transition period. However, in another embodiment, the unlock ring is zoomed out on the touch screen 110 during the transition period. By applying a zoom-in animation effect or a zoom-out animation effect to the unlock ring, the user can clearly notice that the unlock action is done successfully.

Although 100% is taken as an example of the predetermined ratio in the foregoing embodiment, the present invention is not limited thereto. In another embodiment, the predetermined ratio may be 95%, 90%, or other value. If the predetermined ratio is 90%, as long as nine-tenth of the inner area of the unlock ring cross the predetermined edge while the user input is terminated, the electronic device 100 transitions to a user-interface unlock state. It should be noted that while the unlock ring is released (i.e., the user input is terminated), whether the predetermined ratio of the inner area of the unlock ring is completely displayed on the touch screen 110 is not a necessary condition to transition the electronic device 100 to the user-interface unlock state.

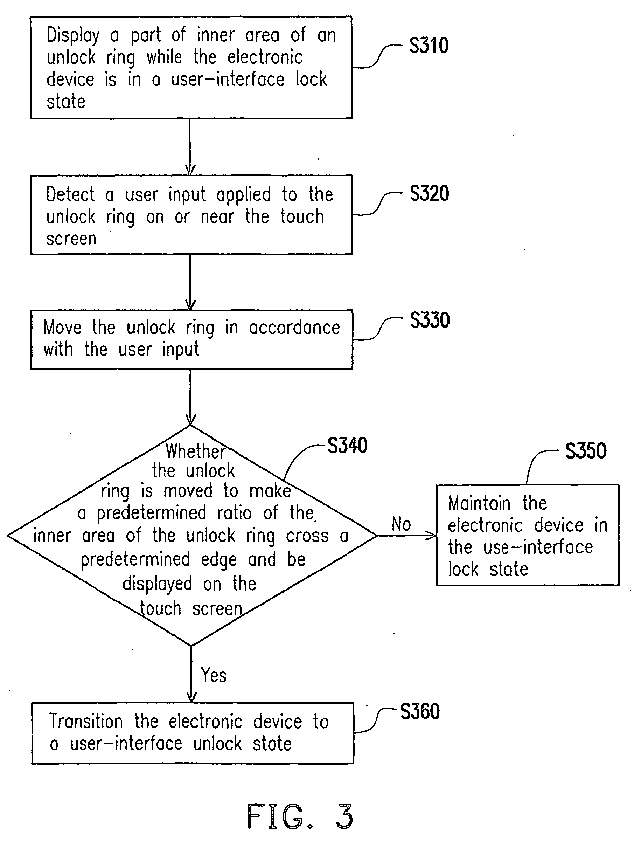

Fig. 3 is a flow chart of a method of controlling an electronic device according to another embodiment of the present invention. The steps in Fig. 3 are similar to those in Fig. 2, and the difference between the two embodiments is that the step S240 in Fig. 2 is replaced by the step S340 in Fig. 3. The similar steps in the two embodiments will not be described in detail herein.

While the unlock ring is moved in accordance with the existent user input, if the user input is terminated, in step S340, whether the unlock ring is moved to make a predetermined ratio of the inner area of the unlock ring cross the predetermined edge and be displayed on the touch screen 110 is determined. For example, it is assumed that the predetermined ratio is 100%. Then, the electronic device 100 will transition to the user-interface unlock state only if the entire inner area of the unlock ring crosses the predetermined edge and is displayed on the touch screen 110.

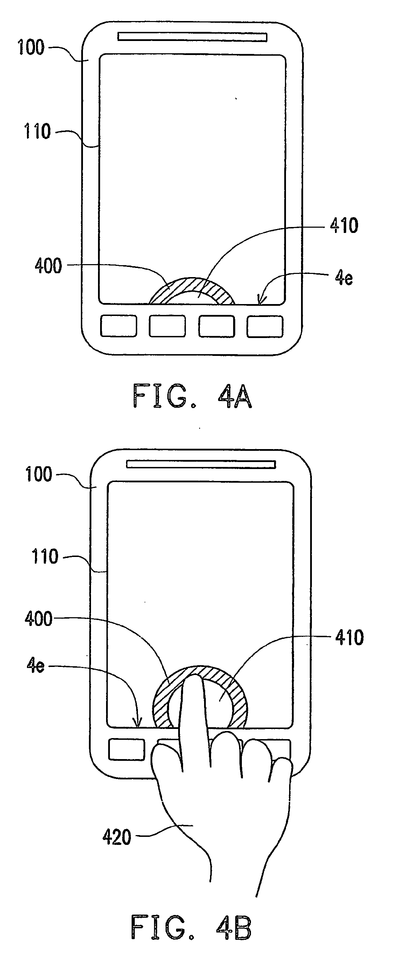

Figs. 4A-4D are schematic views illustrating the visual output while controlling an electronic device according to an embodiment of the invention. In this embodiment, the predetermined ratio is, for example, 100%.

In Fig. 4A, while the electronic device 100 enters a user-interface lock state, a part of inner area 410 of an unlock ring 400 is displayed on the touch screen 110. In the present embodiment, the unlock ring 400 displayed on the touch screen 110 is divided by the down edge 4e of the touch screen 110, however, the initial position of the unlock ring 400 is not limited thereto.

It is assumed that the predetermined edge is the down edge 4e. In Fig. 4B, the user begins the unlock action by touching the unlock ring 400 with his/her hand and finger 420, and then the unlock ring 400 will be moved in accordance with the movement of the finger 420. If the user releases the unlock ring 400 as the situation shown in Fig. 4B, the electronic device 100 remains in the user-interface lock state since a part of the inner area 410 is still below the down edge 4e, meanwhile, a unlock hint is displayed on the touch screen 110. The unlock hint is, for example, a text hint which describes how to unlock the touch screen 110. The unlock hint may fade out if no user input has been detected for a certain amount of time (e.g., 5 seconds).

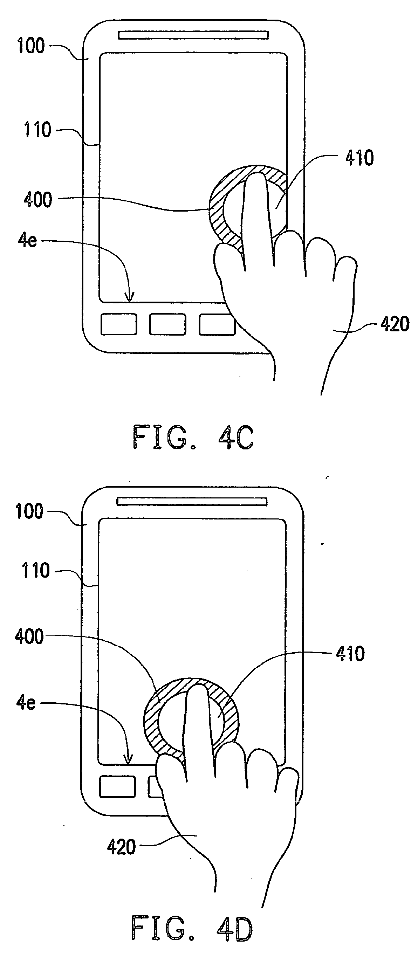

However, in one embodiment, if the user release the unlock ring 400 as the situation shown in Fig. 4C, the electronic device 100 will transition to the user-interface unlock state since all of the inner area 410 of the unlock ring 400 clears the down edge 4e. The electronic device 100 will transition to the user-interface unlock state as long as the entire inner area 410 crosses the down edge 4e, even if there is a portion of inner area 410 does not be displayed on the touch screen 110.

In another embodiment, if the user release the unlock ring 400 as the situation shown in Fig. 4D, the electronic device 100 will transition to the user-interface unlock state since all of the inner area 410 of the unlock ring 400 crosses the down edge 4e and is displayed on the touch screen 110.

It should be noted that the user does not have to move his/her finger 420 vertically to unlock the electronic device 100.

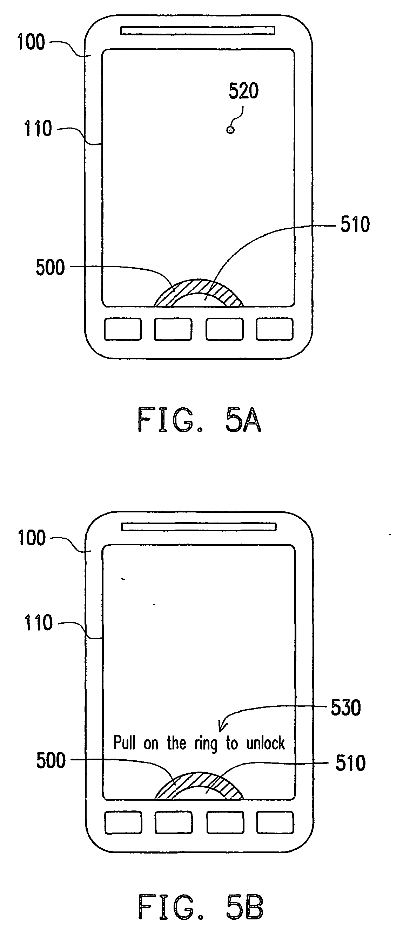

Figs. 5A-5D are schematic views illustrating the visual output while controlling an electronic device according to another embodiment of the invention. In Fig. 5A, the electronic device 100 is in the user-interface lock state, and a part of inner area 510 of an unlock ring 500 is displayed on the touch screen 110. The position of the unlock ring 500 shown in Fig. 5A is called the initial display position. When the user taps on the position 520 or anywhere on the touch screen 110, besides the unlock ring 500, the electronic device 100 maintains in the user-interface lock state. Furthermore, an unlock hint will be displayed on the touch screen 110 in response to the user input that is not applied to the unlock ring 500.

In one embodiment, the unlock hint is a text hint 530 as shown in Fig. 5B. The instructional text hint 530 illustrates how to unlock the touch screen 110 to the user. The text hint 530 may be displayed near the unlock ring 500 or at the top of the touch screen 110. The position of displaying the text hint 530 is not limited in the present invention.

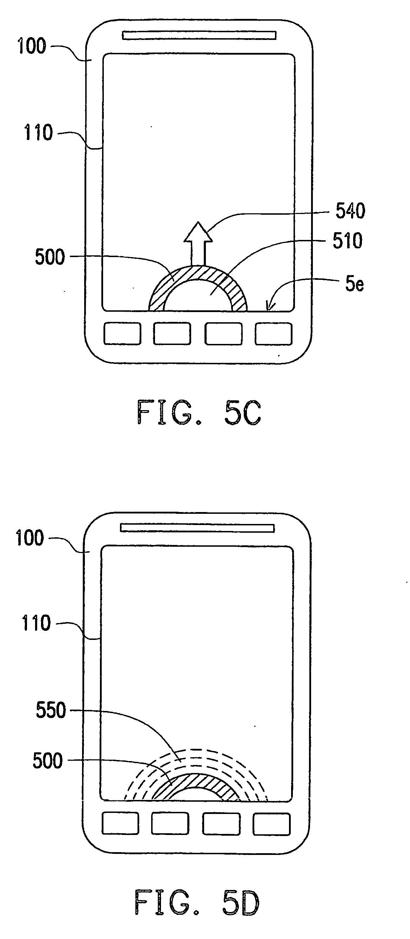

In another embodiment, the unlock hint is an animation hint that moves the unlock ring 500 in a direction that can make the predetermined ratio of inner area of the unlock ring 500 cross the predetermined edge 5e. Since the predetermined edge 5e is the down edge of the touch screen 110, as shown in Fig. 5C, the animation hint is performed in which the unlock ring 500 moves in an upward direction 540. It should be noted that the displacement of moving the unlock ring 500 during the animation is not limited in the present embodiment. The unlock ring 500 may not actually be moved to make the entire inner area 510 cross the predetermined edge 5e. In the present embodiment, the unlock ring 500 moves to a predetermined position and then falls back to the initial display position. In another embodiment, the unlock ring 500 bounces when it falls back to the initial display position. In yet another embodiment, as shown in Fig. 5D, a ripple animation 550 is displayed around the unlock ring 550 when it falls back to the initial display position.

The text and animation hint facilitates a user to perform a correct unlock action even if the user is using the electronic device 100 for the first time.

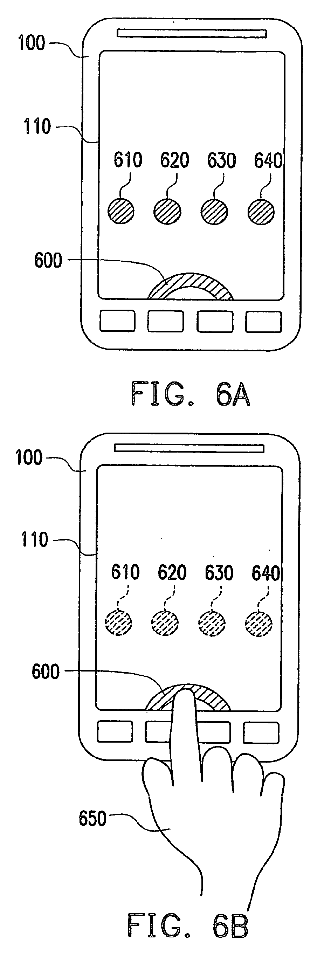

Figs. 6A-6C are schematic views illustrating the visual output while controlling an electronic device according to another embodiment of the invention. In Fig. 6A, besides a part of inner area of the unlock ring 600, four function images 610-640 are displayed outside the unlock ring 600 while the electronic device 100 is in the user-interface lock state. It should be noted that the number of the displayed function image is not limited in the present invention.

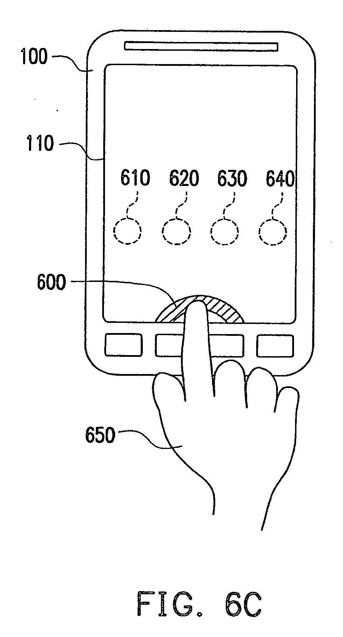

While detecting the user input applied to the unlock ring 600 such as the user touches the unlock ring 600 with his/her finger 650 as shown in Figs. 6B and 6C, the function images 610-640 are fading out gradually. This helps avoid improper user interaction with the function images 610-640 and the unlock ring 600. However, if the electronic device 100 does not transition to the user-interface unlock state within a predetermined time, the function images 610-640 fade in again.

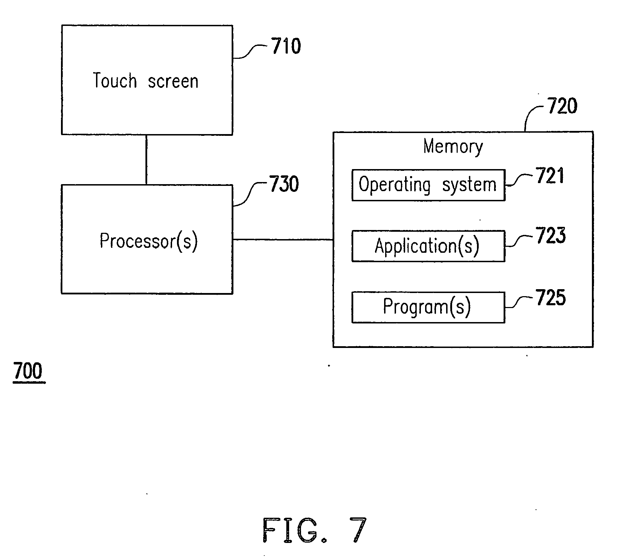

FIG 7 is a block diagram of an electronic device according to an embodiment of the present invention. Referring to FIG. 7, the electronic device 700 includes a touch screen 710, a memory 720, and one or more processors 130. The electronic device 700 is, for example, a mobile phone, a smart phone, a personal digital assistant (PDA), a laptop, a tablet personal computer (PC), or a digital camera, the present invention is not limited thereto.

The touch screen 710 may be a resistive touch screen, a capacitive touch screen, an optical touch screen, or a magnetic touch screen, which is not limited by the present invention. The touch screen 710 is used as an input and output interface for the electronic device 700. That is, the touch screen 710 is configured to display different visual output when using the electronic device 700, and to receive different touch operations from a user. In which, the visual output may be the operating result and/or the operation image such as the home screen image, the lock screen image, or the graphical user interface of applications. While the electronic device 700 is in operation, movement of one or more objects on or near the touch screen 710 can be detected, and the corresponding signals are transmitted to the processor 730 to perform the related action on the electronic device 700, then the generated visual output is displayed on the touch screen 710.

The memory 720 may be an internal storage unit such as a random access memory or a non-volatile memory (e.g., a flash memory, or a magnetic disk storage device). The memory 720 may also be an external storage unit such as Secure Digital (SD) card, a SIM card, or other storage media which can be externally connected to the electronic device 700. The memory 720 may further be a networked online storage that can be accessed through a communication network by a network component (not shown) of the electronic device 700.

In the present embodiment, at least an operating system 721, one or more applications 723, and one or more programs 725 are stored in the memory 720.

The operating system 721 includes various software components and/or drivers and is used for managing a general operation of the electronic device 700. For example, the operating system 721 provides a user interface for users to interact with the electronic device 700, manages applications 723 that are running on the electronic device 700, and manages files stored in the electronic device 700.

The one or more applications 723 include, but not limited to, a phone application, an email application, a camera application, a message application, a contact application, a social network application, a financial application, an alarm application, or a calendar application. The applications 723 may be native applications pre-installed on the electronic device 700, or may be downloaded from third-party sites or online stores.

The one or more programs 725 comprise instructions to be executed by the one or more processors 730. To be specific, the one or more processors 730 run the one or more programs 725 to perform a method of controlling the electronic device 700 of the present embodiment. The controlling method of the present embodiment is described later with reference of figures.

The one or more processors 730 may be a central processing unit (CPU), which is configured to run various software programs and/or instruction sets stored in the memory 720 to perform different functions for the electronic device 700 and to process data after the electronic device 700 is powered on.

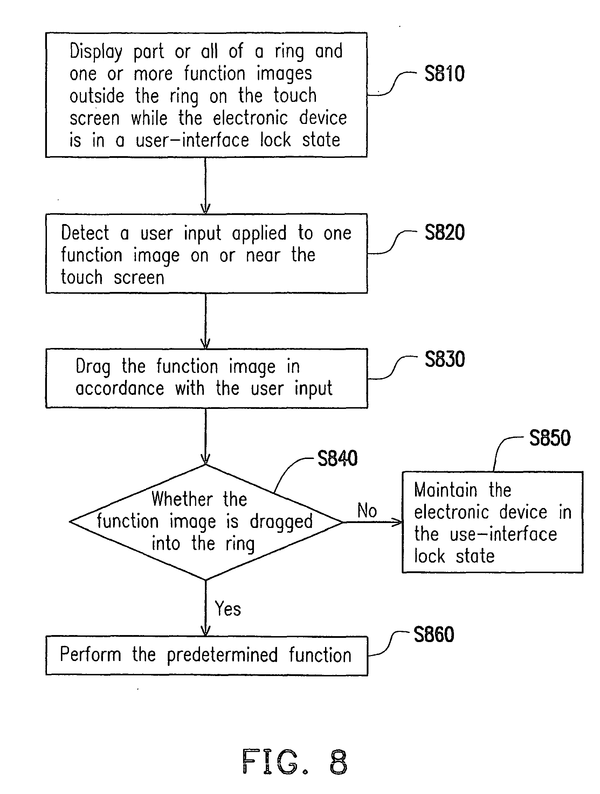

Below, the operation of the electronic device 700 will be described in detail with reference to another embodiment of the invention. FIG. 8 is a flow chart of a method of controlling an electronic device according to the embodiment of the present invention. Please refer to Fig. 7 and Fig. 8.

In the present embodiment, the electronic device 700 is set to a user-interface lock state. To be specific, the electronic device 700 may have a plurality of operation states including the user-interface lock state and a user-interface unlock state. In the user-interface lock state, the electronic device 700 is in operation but ignores most user input. That is, the electronic device 700 in the user-interface lock state may only respond to a predefined set of user inputs, including input that corresponds to an attempt to switch the electronic device 700 to the user-interface unlock state or input that applies to a function image displayed on the touch screen 710.

On the other hand, while the electronic device 700 is in the user-interface unlock state, the electronic device 700 can be operated by the user normally. That is, general functions supported by the electronic device 700 may be invoked, and all kinds of user input from the touch screen 710 or the other input device (e.g., a hardware button, a key, or a scroll wheel) can be responded by the electronic device 700.

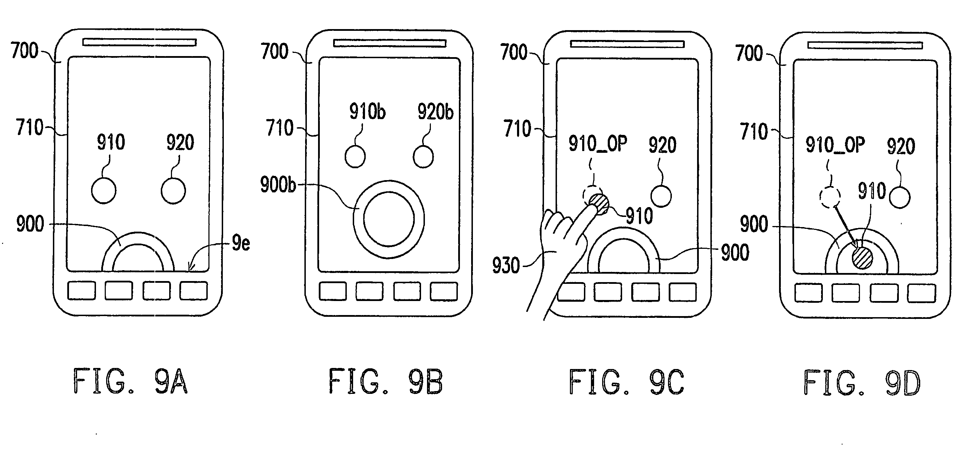

In step S810, part or all of a ring and one or more function images outside the ring are displayed on the touch screen 710 while the electronic device 700 is in the user-interface lock state. Referring to Fig. 9A, in this embodiment, the ring 900 is partially displayed on the touch screen 710, the displayed part of the ring 900 and at least one edge of the touch screen 710 (e.g., the edge 9e) form a closed area, and the one or more function images (e.g., the function images 910 and 920) are all displayed outside the closed area bounded by the ring 900. In another embodiment, as shown in Fig. 9B, the entire ring 900b is displayed on the touch screen 710, the ring 900b forms a closed area by itself, and the one or more function images (e.g., the function images 910b and 920b) are all displayed outside the ring 900b. Each function image displayed on the touch screen 710 corresponds to a predetermined function, and is preloaded in or acquired by the electronic device 700. For example, the function image may be an application icon, a software button, or an image downloaded or captured by the user through the electronic device 700. On the other word, the function image to be displayed on the touch screen 710 may be predetermined by the electronic device 700 or selected by the user.

In step S820, a user input applied to one function image on or near the touch screen 710 is detected. The user input is, for example, an object contact on or near the touch screen 710 associated with the position of the function image.

Then in step S830, the function image is moved in accordance with the user input. Therefore, while the user input is not terminated, the display position of the function image is changed in accordance with the movement of the user input, and the visual feedback is provided to the user through the touch screen 710. For example, as shown in Fig. 9C, while the user touches the function image 910 with his/her finger 930 and drags the function image 910, the display position of the function image 910 is different from the original position 910_OP thereof and is varied accordingly.

Once the user input is terminated, in step S840, it is determined whether the function image is moved into the ring. That is, to determine whether the function image is moved into the closed area bounded by the ring.

If the function image is not moved into the ring, in step S850, the electronic device 700 is maintained in the use-interface lock state. That is, only the user input corresponding to the attempt of switching the electronic device 700 to the user-interface unlock state or the input that applies to the displayed function image will be responded.

However, if the function image is moved into the ring, in step S860, the predetermined function corresponding to the function image is performed. For example, as shown in Fig, 9D while the function image 910 is moved from its original position 910_OP into the ring 900, the predetermined function corresponding to the function image 910 is performed. The examples of performing the predetermined function corresponding to the function image are described in the followings.

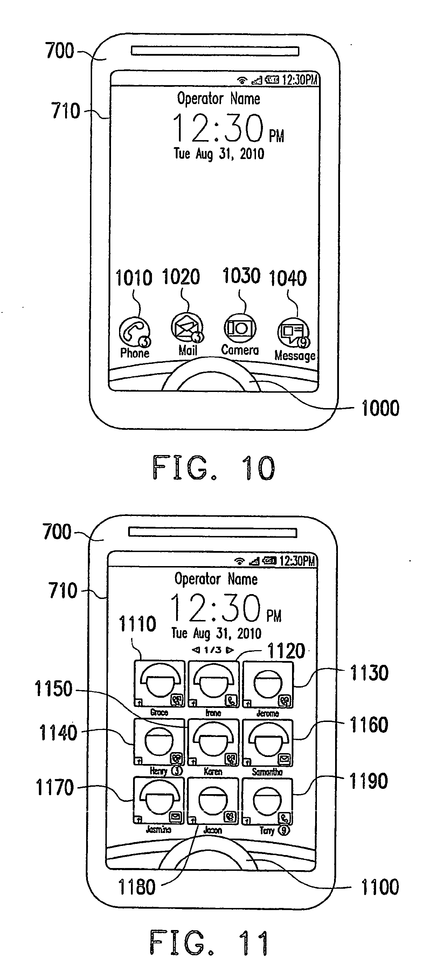

In one embodiment, as shown in Fig. 10, one or more function images (e.g., the function images 1010-1040) will be displayed on the touch screen 710 as long as the electronic device 700 is in the user-interface lock state, and the predetermined function corresponding to this kind of function image is to open a corresponding application. The application is, for example, a phone application, an email application, a camera application, or a message application, the present invention is not limited thereto. Accordingly, if the user drags this kind of function image into the ring 1000 while the electronic device 700 is in the user-interface lock state, the corresponding application will be launched automatically. In Fig. 10, the function images 1010-1040 are corresponding to the phone application, the email application, the camera application, and the message application respectively. Therefore, if one of the function images 1010-1040 is moved into the ring 1000, the corresponding application is then launched.

In another embodiment, the predetermined function corresponding to the function image displayed on the touch screen 710 as long as the electronic device 700 is in the user-interface lock state is to access a social networking service or a website. For example, referring to Fig. 11, nine function images 1110-1190 are displayed outside the ring 1100 while the electronic device 700 is in the user-interface lock state. The function images 1110-1190 are acquired by the electronic device 700 from a certain social networking website through the network, and each of the function images 1110-1190 is corresponding to a user of the social networking website who is a friend of the user of the electronic device 700. If the user drags one of the function images 1110-1190 into the ring 1100 while the electronic device 700 is in the user-interface lock state, a main page of the website user corresponding to the dragged function image is then displayed on the touch screen 710.

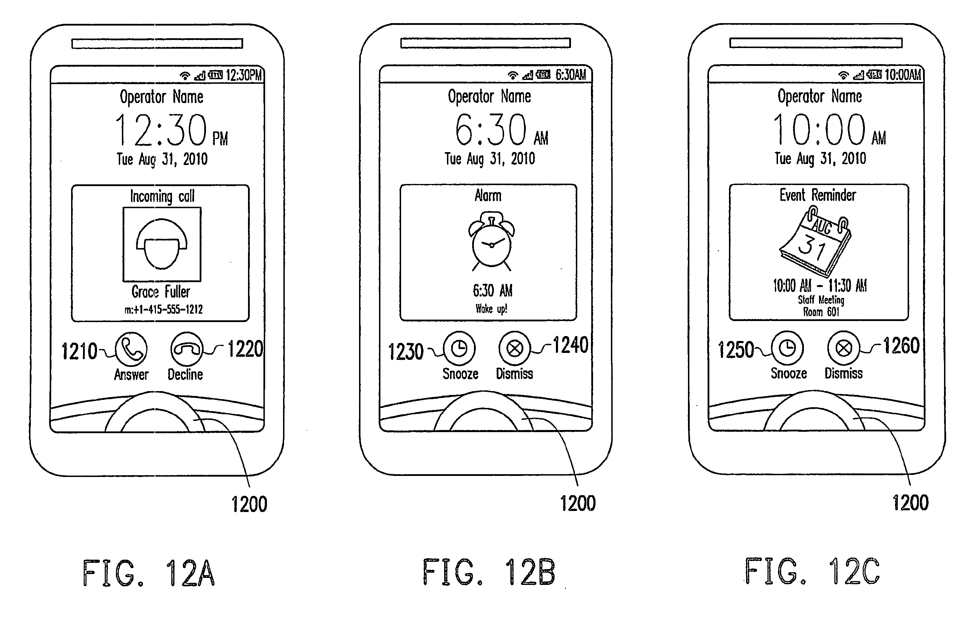

In another embodiment, the function image that will be displayed on the touch screen 710 while the electronic device 700 is in the user-interface lock state is invoked by an occurrence of an event such as an incoming call, an alarm or a calendar reminder, etc. That is to say, in response to an occurrence of an incoming call, an alarm or a calendar reminder during the electronic device 700 is in the user-interface lock state, the one or more function images corresponding to the event are then displayed on the touch screen 710. At this time, if the user drags this kind of function image into the ring, an operation of the event will be executed. For example, as shown in Fig. 12A, if one or more function images 1210 and 1220 are invoked by an occurrence of an incoming call, the user may answer or decline the incoming call by dragging the related function image 1210 or 1220 into the ring 1200. Referring to Fig. 12B, if one or more function images 1230 and 1240 are invoked by an activation of an alarm, the user may snooze or dismiss the alarm by dragging the related function image 1230 or 1240 into the ring 1200. Referring to Fig. 12C, if one or more function images 1250 and 1260 are invoked by an activation of a calendar reminder, the user may snooze or dismiss the calendar reminder by dragging the related function image 1250 or 1260 into the ring 1200.

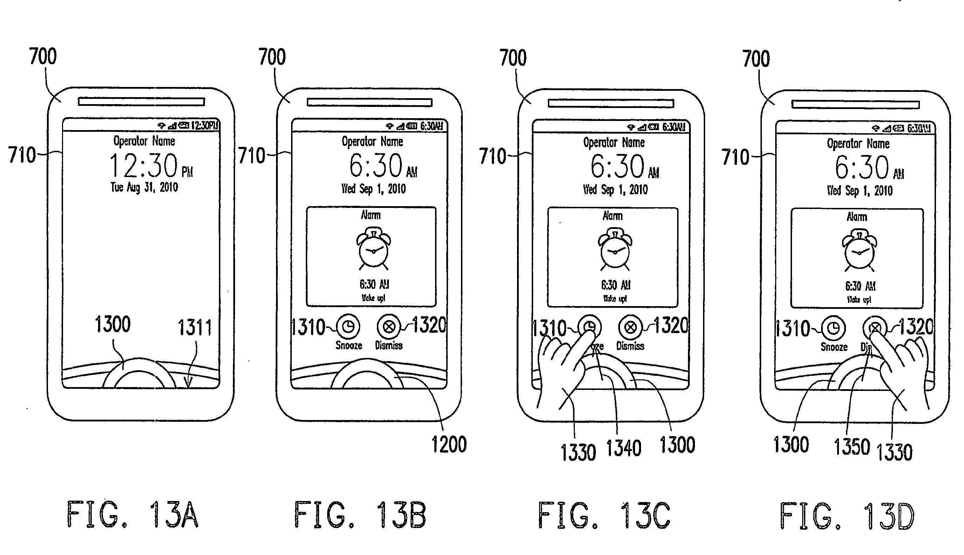

Figs. 13A-13H illustrate schematic diagrams while controlling an electronic device in the user-interface lock state according to an embodiment of the invention.

In Fig 13A, when the electronic device 700 is in the user-interface lock state, the ring 1300 is partially displayed on the touch screen 710, wherein the displayed part of the ring 1300 and the edge 1311 of the touch screen 710 form a closed area.

It is assumed that an alarm event happens while the electronic device 700 is still in the user-interface lock state. Accordingly, as shown in Fig. 13B, two function images 1310 and 1320 are displayed outside the ring 1300 in response to the occurrence of the alarm event. In which, the function image 1310 is corresponding to a snoozing operation and the function image 1320 is corresponding to a dismissing operation.

As shown in Fig. 13C, if the user touches the function image 1310 without moving his/her finger 1330 (or the input tool) and the touch time reaches a predetermined time threshold, the ring 1300 is slightly moved toward the function image 1310 (e.g., along the direction 1340) in response to detecting the touch. Alternatively, as shown in Fig. 13D, if the user touches the function image 1320 without moving his/her finger 1330 (or the input tool) and the touch time reaches the predetermined time threshold, the ring 1300 is slightly moved toward the function image 1320 (e.g., along the direction 1350) in response to detecting the touch. That is, the ring 1300 is slightly moved in response to detecting the static touch on the function image 1310 or 1320.

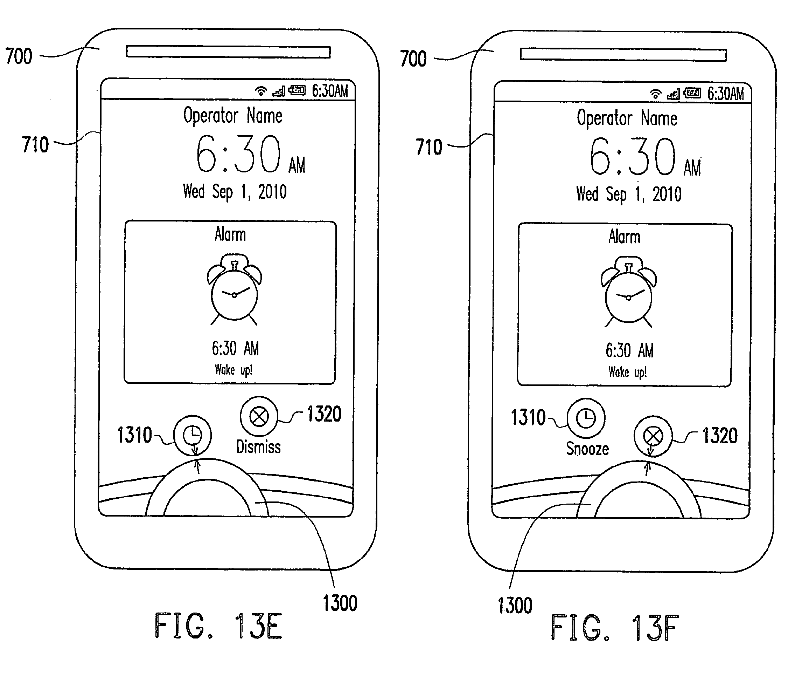

In another embodiment, as shown in Fig. 13E, if the user taps the function image 1310 and then lifts his/her finger (or the input tool), the function image 1310 and the ring 1300 are moved toward each other. As shown in Fig. 13F, if the user taps the function image 1320 and then lifts his/her finger (or the input tool), the function image 1320 and the ring 1300 are moved toward each other.

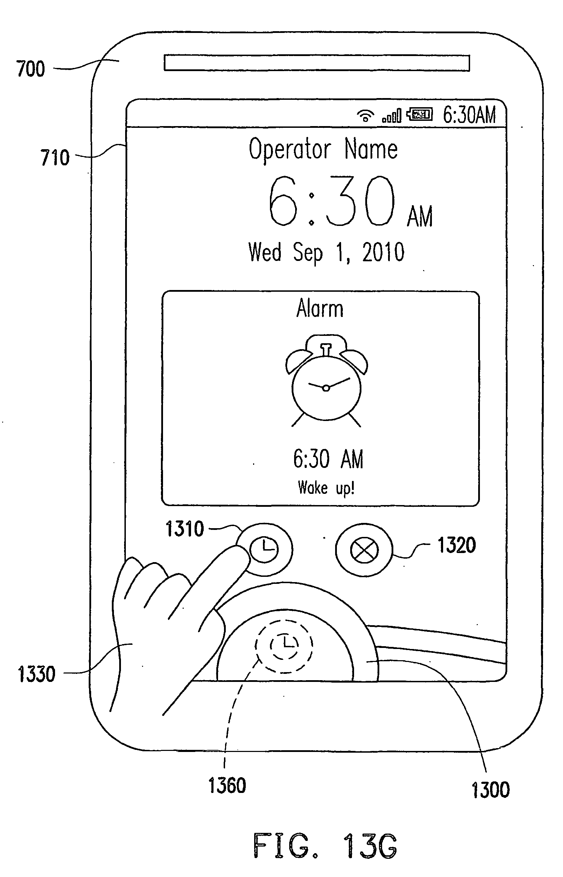

Furthermore, while detecting the user input applied to the function image 1310 or 1320 near or on the touch screen 710, a hint image of the function image being touched or tapped is displayed inside the ring 1300. Referring to Fig. 13G, it is assumed that the user touch the function image 1310 with his/her finger 1330, a hint image 1360 corresponding to the function image 1310 is then displayed inside the ring 1300. The hint image 1360 may have the same shape and pattern with the function image 1310 but provides the grayscale effect. However, the appearance of the hint image is not limited in the present invention. In the present embodiment, to move the touched function image 1310 or 1320 and/or the ring 1300, and to show the corresponding hint image can provide hints or reminders of the operation to drag the function image 1310 or 1320 into the ring 1300 to the user.

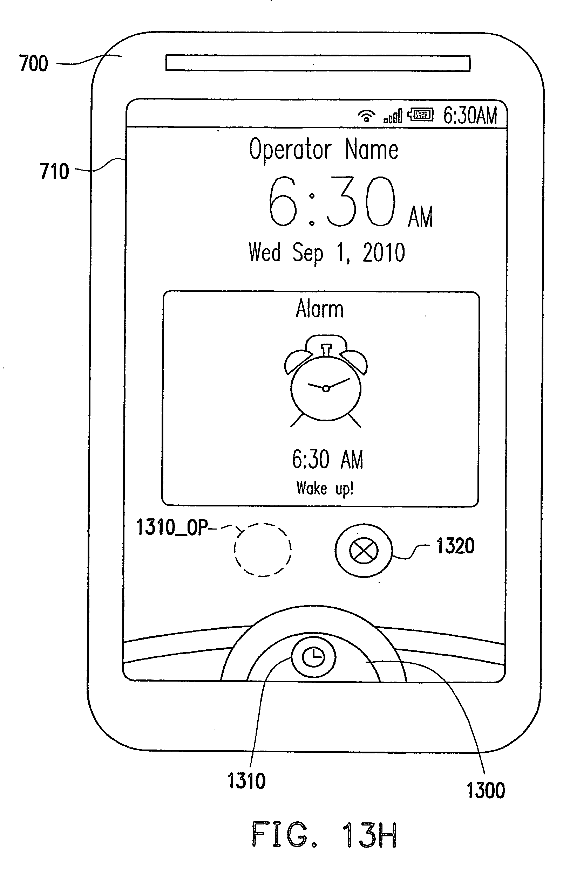

As shown in Fig. 13H, if the user drags the function image 1310 from the original position 1310_OP into the ring 1300 and releases the function image 1310, the snoozing operation is executed to snooze the alarm accordingly.

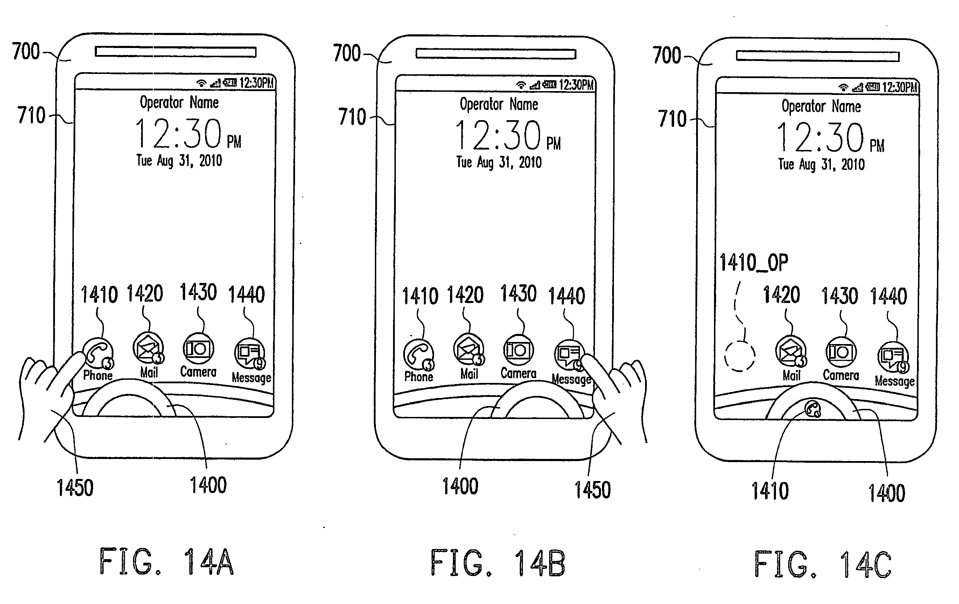

Figs. 14A-14C illustrate schematic diagrams while controlling an electronic device in the user-interface lock state according to another embodiment of the invention.

In Fig 14A, when the electronic device 700 is in the user-interface lock state, a part of the ring 1400 and four function images 1410-1440 are displayed on the touch screen 710. In which, the function images 1410-1440 are respectively corresponding to four applications. In the present embodiment, the applications are default applications predetermined by the electronic device 700. However, the number of function images being displayed is not limited in the present invention, in another word, the user may select one or more applications from all applications installed in the electronic device 700, and one or more function images corresponding to each application selected by the user will be displayed along with the ring 1400 while the electronic device 700 is in the use-interface lock state.

Meanwhile, if any one of the function images 1410-1440 is touched, the ring 1400 will move toward the touched function image. For example, as shown in Fig. 14A, it is assumed that the function image 1410 is touched by the user, the ring 1400 moves toward the function image 1410. As shown in Fig. 14B, if the function image 1440 is touched by the user, the ring 1400 moves toward the function image 1440.

Alternatively, in other embodiment, if the user taps one of the function images 1410-1440 and then lifts his/her finger, the tapped function image and the ring 1400 will move toward each other. Furthermore, a hint image of the touched or tapped function image is displayed inside the ring 1400 in response to detecting the user input applied on the function image.

If the user touches the function image 1410, drags the function image 1410 from its original position 1410_OP into the ring 1400, and then releases the function image 1410, as shown in Fig. 14C, the electronic device 700 exits the user interface lock state and the application (e.g. the phone application) corresponding to the function image 1410 is launched. To be specific, the default view (e.g., the default user interface) of the application will be displayed on the touch screen 710. On the other hand, if the function image 1410 corresponds to the application which is already launched, the latest view of the application is displayed to present the latest operating result to the user.

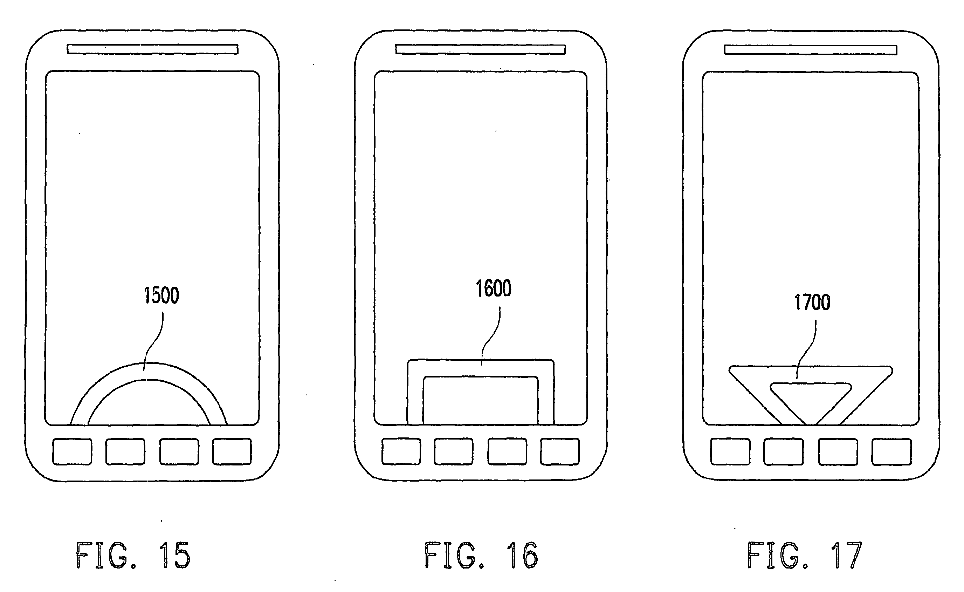

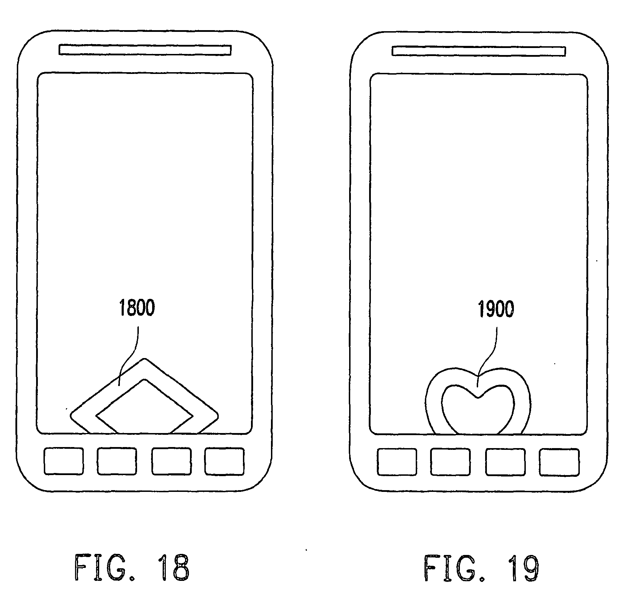

In the foregoing embodiments, the ring displayed on the touch screen 710 while the electronic device 700 is in a user-interface lock state is a circular ring. However, it should be appreciated that while the electronic device 700 is in the user-interface lock state, the ring displayed on the touch screen 710 may have an elliptic shape, a polygon shape, or an irregular shape. That is, the shape of the ring is not limited by the present invention. For example, the ring may have an elliptic shape as the ring 1500 shown in Fig. 15. In other embodiments, the ring may have a rectangle shape as the ring 1600 shown in Fig. 16, a triangle shape as the ring 1700 shown in Fig. 17, or a rhombus shape as the ring 1800 shown in Fig. 18. Furthermore, the ring may have a heart shape as the ring 1900 shown in Fig. 19.

In the following embodiment, the background of an electronic device when it is in the user-interface unlock state is referred to as the home screen, while the main screen of the electronic device when it is in the user-interface lock state is referred to as the lock screen. Moreover, a launch bar is displayed at the bottom of the home screen.

Each time the user selects application(s) to add the corresponding shortcut icon(s) to the launch bar at the bottom of the home screen, the corresponding function image(s) of the shortcut icon(s) will be automatically displayed on the lock screen of the electronic device. Alternatively, if there are one or more default shortcut icons on the launch bar, the corresponding function images of these default shortcut icons will be displayed on the lock screen while the electronic device enters the user-interface lock state. Moreover, the user may press-and-hold one shortcut icon on the launch bar and drag it over another shortcut icon on the launch bar to create a shortcut folder (these two shortcut icons are added into the shortcut folder), and the function image of the shortcut folder will be displayed on the lock screen. To be specific, the user can add, delete, or organize the shortcut icon on the launch bar, and the lock screen will reflect the modification. That is, the function image(s) displayed on the lock screen will be synchronized and corresponding to the shortcut icon(s) and/or the shortcut folder(s) on the launch bar.

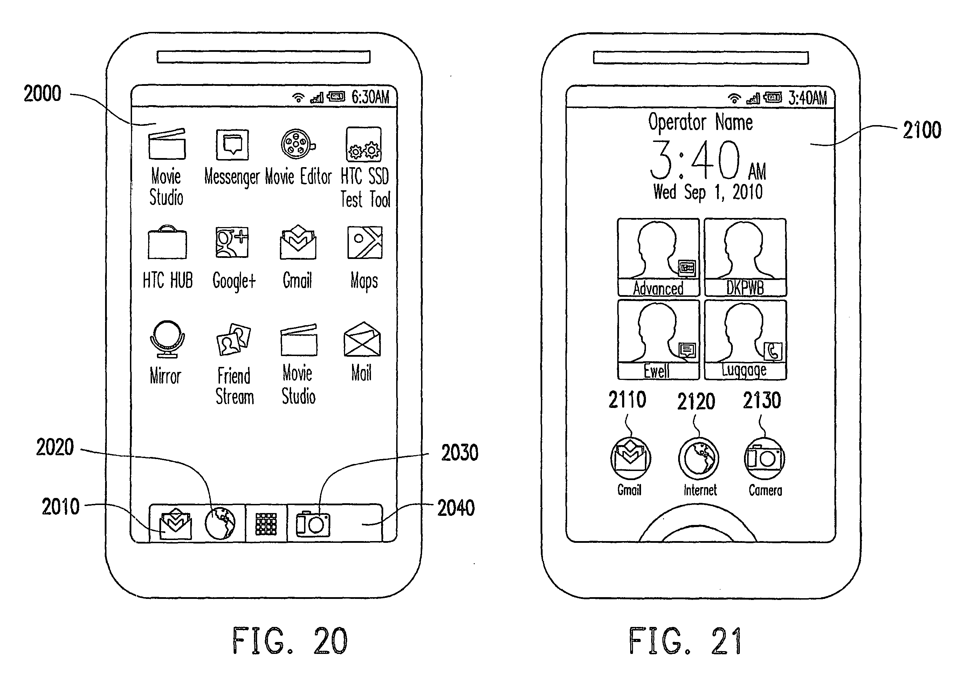

For example, referring to Fig. 20, three default shortcut icons 2010-2030 are displayed on a launch bar 2040, wherein the launch bar 2040 is at the bottom of the home screen 2000. In this embodiment, the shortcut icons 2010-2030 are corresponding to an e-mail application, a web browser application, and a camera application, however, the type and the number of the default application is not limited thereto. The lock screen corresponding to the launch bar 2040 is shown in Fig. 21. Referring to Fig. 21, three function images 2110-2130 of the default shortcut icons 2010-2030 corresponding to the e-mail application, the web browser application, and the camera application are displayed on the lock screen 2100, and the application name is also displayed below each of the function images 2110-2130.

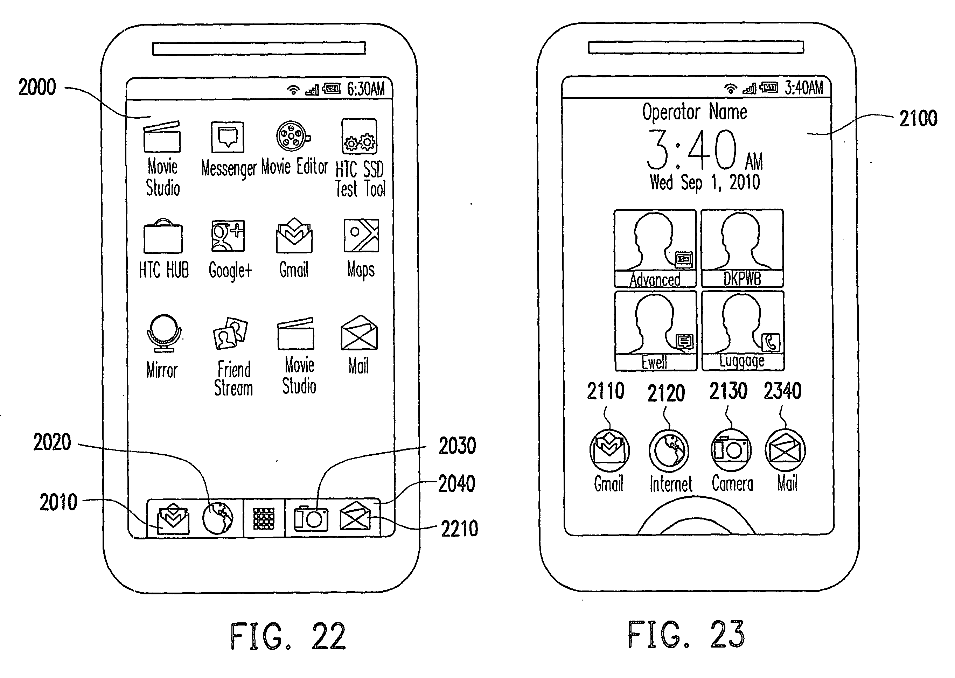

As shown in Fig. 22, if the user drag a shortcut icon 2210 of the mail application to the launch bar 2040, the configuration of the lock screen 2100 will be changed automatically as shown in Fig. 23, wherein the function image 2340 of the shortcut icon 2210 is displayed on the lock screen 2100 automatically.

In one embodiment, as shown in Fig. 21 and Fig. 23, the displayed function images 2110-2130 and 2340 may be aligned and equally displayed on the lock screen 2100. However, the display manner of the function image is not limited thereto.

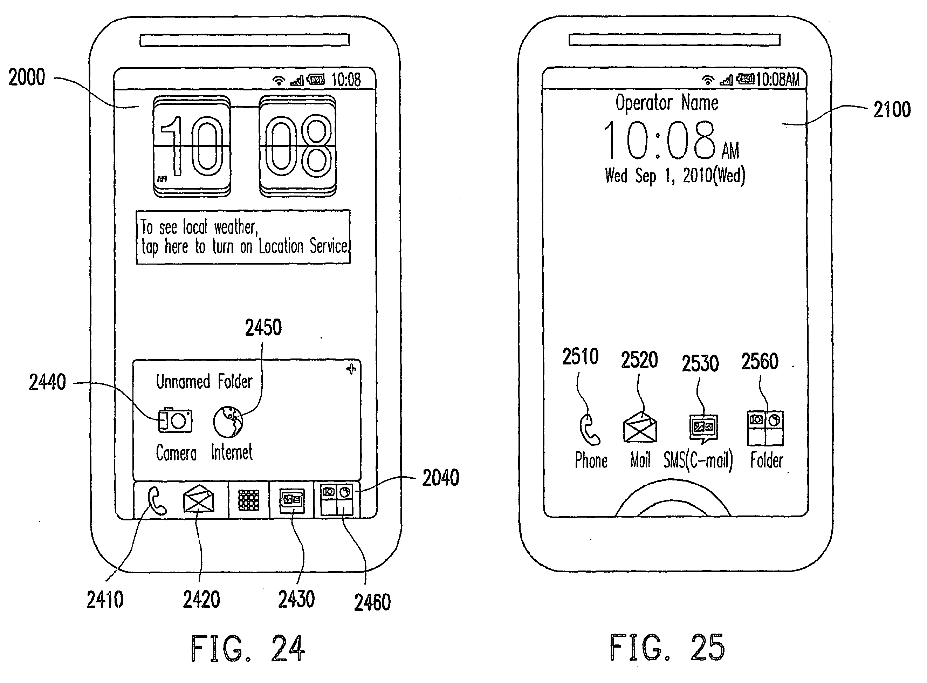

In another embodiment, as shown in Fig. 24, three shortcut icons 2410-2430 are displayed on the launch bar 2040. If the user press-and-hold the shortcut icon 2440 of camera application, and drag it onto the shortcut icon 2450 of web browser application, then, the shortcut icons 2440 and 2450 of two applications become a folder with a default folder name "Unnamed Folder" (the folder name can be changed by the user). The launch bar 2040 now has three shortcut icons 2410-2430 and one shortcut folder 2460 displayed thereon. Accordingly, while the electronic device enters the user-interface lock state, the function images 2510-2530 corresponding to the shortcut icons 2410-2430 and the function image 2560 corresponding to the shortcut folder 2460 are displayed on the lock screen 2100 as shown in Fig. 25. The user may drag any function image into the ring to launch it.

It should be noted that the appearance of the shortcut icon or the shortcut folder displayed on the launch bar may be visually different from the corresponding function image displayed on the lock screen. For example, the function image of a shortcut icon (or a shortcut folder) on the lock screen is displayed with the name of the application corresponding to the function image (or the folder name of the shortcut folder) while the shortcut icon or the shortcut folder in the launch bar is not, or vice versa. Besides, the displaying sequence of the function images of the shortcut icons/folders in the lock screen and the displaying sequence of the shortcut icons/folders in the launch bar may be different.

Along with the increasing variety of supported functions of an electronic device, when the electronic device is in a user-interface lock state, if data displayed on a screen background presents a user's preference or a commonly used function of the electronic device, usage convenience of the electronic device may be improved. The invention provides a method for providing a background of a locked screen, an electronic device and a computer program product using the same according to the above point of view. In order to fully convey the spirit of the invention, embodiments are provided below for descriptions.

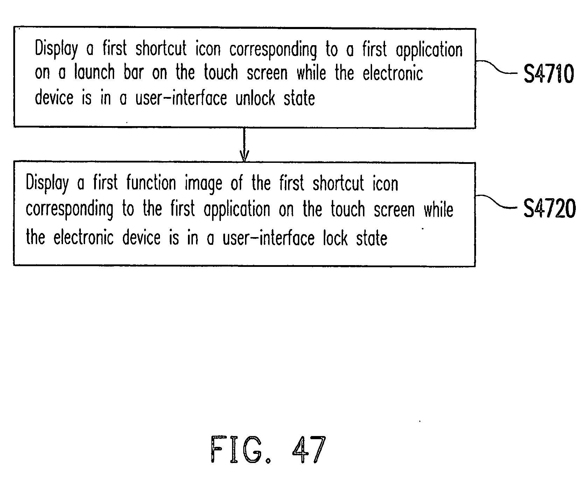

FIG. 47 is a flow chart of a synchronization method of an electronic device according to an embodiment of the present invention.

In step S4710, a first shortcut icon corresponding to a first application on a launch bar on the touch screen is displayed while the electronic device is in a user-interface unlock state.

In step S4720, a first function image of the first shortcut icon corresponding to the first application is displayed on the touch screen while the electronic device is in a user-interface lock state.

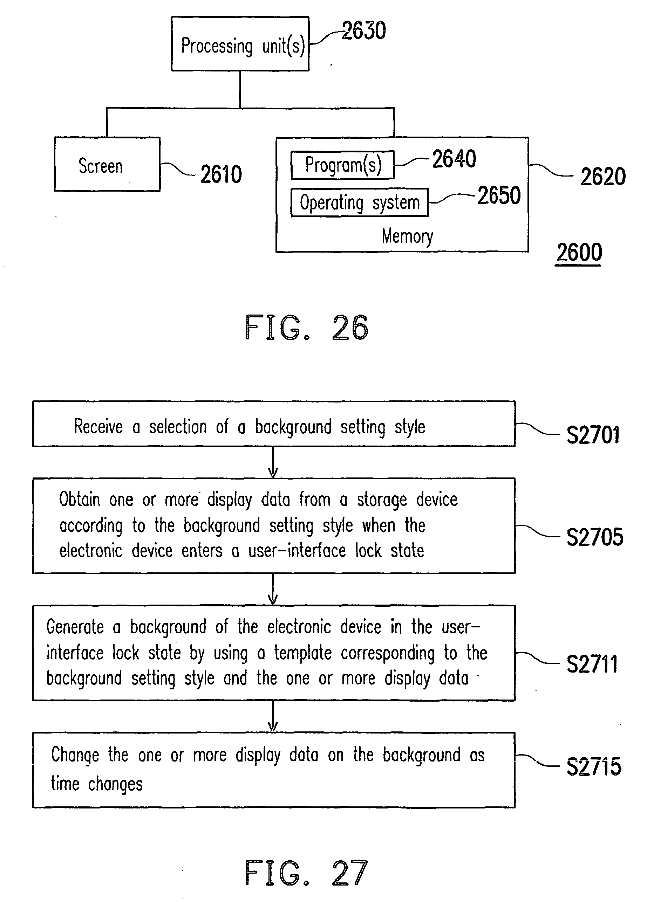

FIG. 26 is a block diagram of an electronic device according to an embodiment of the invention. The electronic device 2600 of the present embodiment includes a screen 2610, a memory 2620 and one or more processing units 2630, where the one or more processing units 2630 are coupled to the screen 2610 and the memory 2620. The electronic device 2600 is, for example, a mobile phone, a smart phone, a personal digital assistant (PDA), a laptop computer, a tablet personal computer (PC), a digital camera, an electronic book or a game machine, etc., which is not limited by the invention.

In an embodiment, the screen 2610 may be any type of a touch screen, for example, a resistive touch screen, a capacitive touch screen, an optical touch screen, an acoustic wave touch screen, an electromagnetic touch screen, etc., though the invention is not limited thereto. The screen 2610 having a touch control function can serve as an input/output interface of the electronic device 2600. Namely, the screen 2610 may be used to receive a touch input from the user, and may be used to display information of the electronic device 2600. The information may be operation interfaces of various applications, widgets, services or functions and generated information contents. In another embodiment, the screen 2610 can also be a liquid crystal display (LCD) that only has the display function, and the user has to perform input through an input device such as a hardware button or a keyboard, etc.

The memory 2620 may be an internal storage unit or an external storage unit. The internal storage unit may be a random access memory (RAM), a read-only memory (ROM), a flash memory, or a magnetic disk storage device, etc. The external storage unit may be a compact flash (CF) memory card, a secure digital (SD) memory card, a micro SD memory card, or a memory stick (MS), etc., and the external storage unit is connected to the electronic device 2600 through a corresponding interface. Moreover, the memory 2620 can also be a network storage space, and the electronic device 2600 may connect and access the network storage space through a network by using a network device (not shown).

In the present embodiment, the memory 2620 stores one or more programs 2640 and an operating system 2650. Moreover, the memory 2620 may also store various applications (not shown) and widgets (not shown) that can be executed on the electronic device 2600, and software components (not shown) required in operation.

The one or more programs 2640 include one or more instructions. Further, the one or more processing units 2630 execute the instructions included in the one or more programs 2640 to implement a method for providing a background of a locked screen of the present embodiment, so as to generate the background displayed on the screen 2610 when the electronic device 2600 is in the user-interface lock state. Each of the one or more processing units 2630 may be a central processing unit (CPU), a programmable microprocessor, a digital signal processor (DSP), a programmable controller, an application specific integrated circuit (ASIC), a programmable logic device (PLD) or other similar devices. In this way, when the electronic device 2600 is activated, the one or more processing units 2630 can execute the one or more programs 2640 stored in the memory 2620 and/or other software installed in the electronic device 2600.

Various steps of the method for providing a background of a locked screen of the present embodiment are described below with reference of the electronic device 2600. FIG. 27 is a flowchart illustrating a method for providing a background of a locked screen according to an embodiment of the invention. It should be noticed that the electronic device 2600 of the present embodiment has the user-interface lock state and a user-interface unlock state. It is assumed that the screen 2610 serves as an input interface (for example, a touch screen) of the electronic device 2600. When the electronic device 2600 is in the user-interface lock state, the electronic device still continually operates, and when the user touches the screen 2610, the electronic device 2600 ignores most of touch signals generated by the user input. Namely, the electronic device 2600 can only receive predetermined touch signals including a predetermined touch signal used for switching the user-interface lock state/the user-interface unlock state, and a predetermined touch signal used for switching display data on the background displayed on the screen 2610. On the other hand, when the electronic device 2600 is in the user-interface unlock state, the user can normally operate the electronic device 2600. Namely, functions and services supported by the electronic device 2600 and applications and widgets installed in the electronic device 2600 can all be called and used. Further, the electronic device 2600 in the user-interface unlock state can receive a signal input through the screen 2610 and generate a corresponding operation result. Signals input through other input devices can also be processed by the electronic device 2600 in the user-interface unlock state.

Referring to FIG. 26 and FIG. 27, in step S2701, a selection of a background setting style is received. In the present embodiment, the electronic device 2600 has a plurality of background setting styles for selection, where each of the background setting styles corresponds to a widget, an application, a function or a service provided by the electronic device 2600. For example, the background setting styles may include an application shortcut style, a contacts style, a social network service style, a gallery style, weather information style, stock information style, a virtual clock style, a note style, or a task style, etc., though the invention is not limited thereto. Namely, the electronic device 2600 may also have other background setting styles for selection. In an embodiment, the user may select the background setting style when the electronic device 2600 is in the user-interface unlock state. In another embodiment, the electronic device 2600 may analyse a usage habit of the user to automatically select the background setting style.

After the specific background setting style is selected, in step S2705, when the electronic device 2600 enters the user-interface lock state, one or more display data are obtained from a storage device according to the currently selected background setting style. The storage device of the present embodiment may be a remote storage device or a local storage device. The remote storage device is, for example, an online storage, and the local storage device may be built in or externally connected to the electronic device 2600, which is, for example, a built in hard disk, a portable memory device (e.g., a pen drive), or a memory card, etc. A type of the display data corresponds to the selected background setting style. For example, the display data corresponding to the application shortcut style include a picture file serving as a wallpaper and one or more applications the function image of the shortcut icon of the applications will be displayed. The display data corresponding to the contacts style or social network service style include contacts information and/or dynamic information shared to a community website by friends. The display data corresponding to the gallery style include photos and images. The display data corresponding to the weather information style include a current temperature, a weather status, a rain rate, a future/past weather report, etc. The display data corresponding to the stock information style includes a stock market content, such as stock price, stock quote, market trend, a stock trend, futures, and a classification option price and Hong King Shanghai and Shenzhen stocks, etc. The display data corresponding to virtual clock style includes a minute, a second and a date of time. In such step, the one or more display data are, for example, obtained from a remote storage device corresponding to the background setting styles through a network, or the one or more display data are directly obtained from the local storage device.

Then, in step S2711, a background of the electronic device 2600 in the user-interface lock state is generated by using a template corresponding to the background setting style and the obtained display data. In step S2715, the display data on the background changes as time changes. Namely, when the electronic device 2600 is in the user-interface lock state, the background displayed on the screen 2610 is no longer a pure picture file, but presents different types of display data according to the selection of the background setting style, and the various types of display data is presented according to the template corresponding to the background setting style, and a content and/or a presenting manner of the display data changes as time changes.

It should be noticed that the background generated according to the background setting style does not include information such as a signal strength, a remaining power, a name of a telecommunication practitioner, and a time/date, etc. that are constantly displayed on the electronic device 2600 regardless whether the electronic device 2600 is in the user-interface lock state or the user-interface unlock state. In other words, besides the aforementioned information that are constantly displayed on the electronic device 2600, the user can obtain more diversified information through the background when the electronic device 2600 is in the user-interface lock state. Different background setting styles are described in detail below.

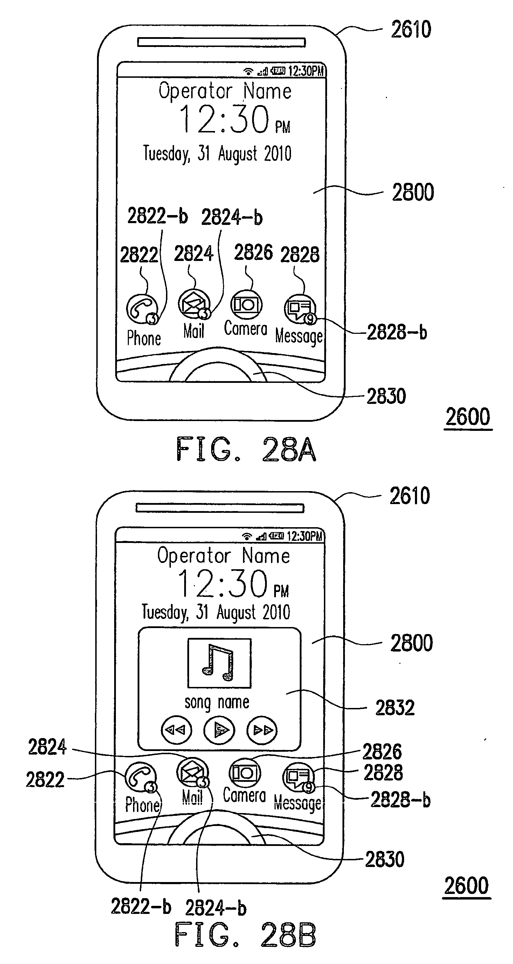

FIG. 28A is a schematic diagram of a background corresponding to a background setting style of application shortcut according to an embodiment of the invention. In the present embodiment, it is assumed that the user selects the application shortcut style as the background setting style. When the electronic device 2600 enters the user-interface lock state, the obtained one or more display data include a picture file serving as the wallpaper and function images of shortcut icons of applications to be displayed (for example, obtained from the local storage device), and the background generated according to the template is shown as a background 2800 of FIG. 28A. As shown in FIG. 28A, the background 2800 includes function images 2822, 2824, 2826 and 2828 corresponding to the applications of phone call, email, camera and message, etc., though the types of the applications are not limited thereto. Further, the electronic device 2600 may provide a plurality of predetermined applications (for example, phone call, email, camera, message, file browser, web browser, multimedia player, calculator, calendar, and music, etc.), and the user can select at least one predetermined application when the electronic device 2600 is in the user-interface unlock state. As long as a selecting instruction generated by the aforementioned selection operation is received, and if the background setting style is the application shortcut style, when the electronic device 2600 is in the user-interface lock state, the function image of shortcut icon of the selected predetermined application is then displayed on the background 2800 to serve as a shortcut for activating the application. In detail, the user can quickly activate an application by operating a corresponding function image displayed on the background 2800, and the electronic device 2600 accordingly leaves the user-interface lock state.

For example, the user may drag the function image 2822 corresponding to the phone call application into the ring 2830, so as to launch the phone call application instantly. Alternatively, the user may drag the ring 2830 onto the function image 2824 corresponding to the email application to launch the email application instantly. Moreover, the user may drag the ring 2830 and the function image 2826 corresponding to the camera application at the same time and makes the ring 2830 and the function image 2826 approach each other to immediately launch the camera application.

Moreover, the one or more display data may further include a message that can be accessed or generated by the application that the function image of the shortcut icon thereof should be displayed, and information related to the above message is displayed in form of a mark icon (for example, mark icons 2822-b, 2824-b and 2828-b) together with the function image. Taking the function image 2824 of the email as an example, the mark icon 2824-b represents the number of unread emails in an inbox. In this way, when the electronic device 2600 is in the user-interface lock state, the user can learn the number of unread emails according to the function image 2824 and the mark icon 2824-b displayed in the background 2800.

In the present embodiment, although the four function images 2822, 2824, 2826 and 2828 are illustrated for corresponding to four selected predetermined applications, the number and types of the predetermined applications are not limited thereto, and when the electronic device 2600 enters the user-interface lock state, as long as the background displayed on the screen 2610 includes a function image of a shortcut icon of one or more predetermined application, it is considered to be within the scope of the invention.

In another embodiment, the obtained one or more display data further include a lock screen widget corresponding to an application being executed on the electronic device 2600. When the user drags the lock screen widget into the ring displayed on the screen 2610, the application corresponding to the lock screen widget is launched immediately. FIG. 28B is a schematic diagram of a background corresponding to a background setting style of application shortcut according to this embodiment of the invention. It is assumed that a music application is executed on the electronic device 2600, and once the electronic device 2600 enters the user-interface lock state, besides the function images 2822, 2824, 2826 and 2828, a lock screen widget 2832 corresponding to the music application is also displayed on the background 2800. If the user drags lock screen widget 2832 into the ring 2830, the corresponding music application is launched and a now playing screen (e.g., the latest view of the user interface of the music application) of the music application is displayed on the screen 2610.

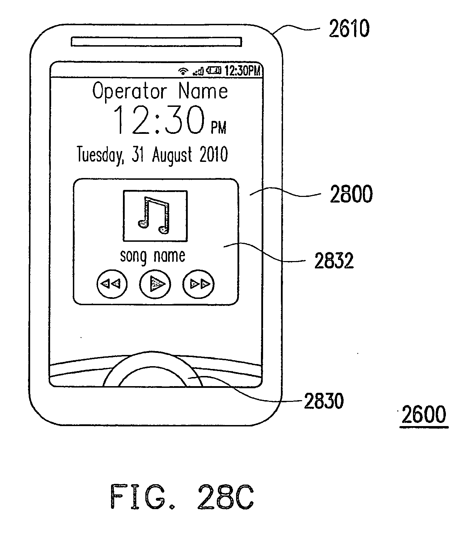

It should be noted that displaying a lock screen widget on the background of the electronic device 2600 in the user-interface lock state is not limited by the background setting style. That is, no matter what kind of background setting style is being selected (or no background setting style is being selected), as long as an application installed in the electronic device 2600 is executed and the corresponding lock screen widget is displayed on the background of the electronic device 2600 in the user-interface lock state, so that the application can be launched by moving the lock screen widget into the ring displayed on the background, moving the ring onto the lock screen widget, or moving both of the ring and the lock screen widget to make them approach each other within a predetermined distance, it is considered to be within the scope of the invention. FIG. 28C is a schematic diagram of a background corresponding to no background setting style is being selected according to an embodiment of the invention. Referring to FIG. 28C, only a lock screen widget 2832 corresponding to an application (e.g., the music application) which is already executed on the electronic device 2600 is displayed on the background 2800. The application can be instantly launched in the same or similar way as described above.

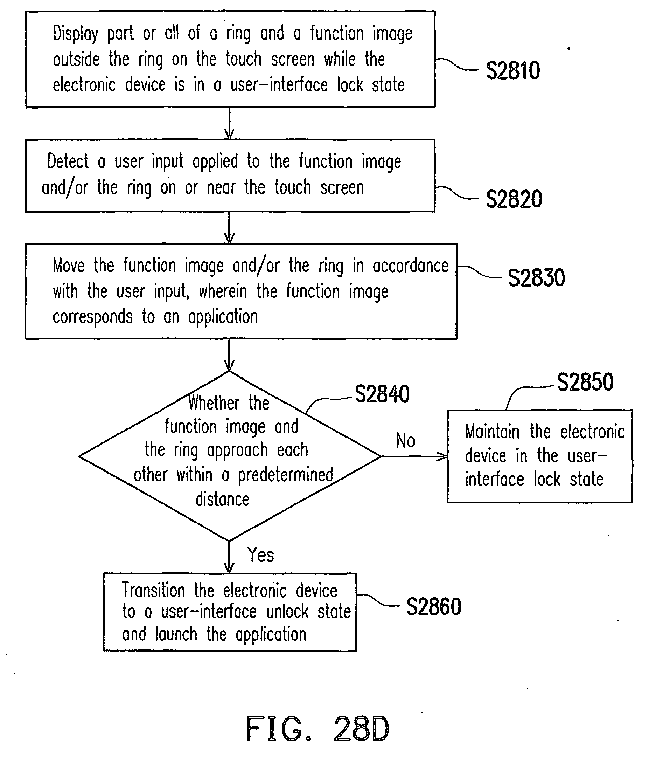

FIG. 28D is a flowchart illustrating a method of controlling an electronic device according to an embodiment of the invention. Referring to Fig. 28D, in step S2810, part or all of a ring and one or more function images outside the ring are displayed on the touch screen 2610 while the electronic device 2600 is in the user-interface lock state (as shown in Figs. 28A-28C). In step S2820, a user input applied to the function image and/or the ring on or near the touch screen 2610 is detected. In step S2830, the function image and/or the ring will be moved in accordance with the user input, wherein the function image corresponds to an application. In step S2840, it is determined that whether the function image and the ring approach each other within a predetermined distance. For instance, it is determined that whether the function image is moved into the ring, whether the ring is moved onto the function image, or whether the function image and the ring are approached to each other within the predetermined distance. If the determination result of the step S2840 is negative, that is , the function image and the ring do not approach each other within the predetermined distance, in step S2850, the electronic device 2600 maintains in the user-interface lock state. If the determination result of the step S2840 is affirmative, in step S2860, the electronic device 2600 transition to a user-interface unlock state and the application corresponding to the function image is launched.

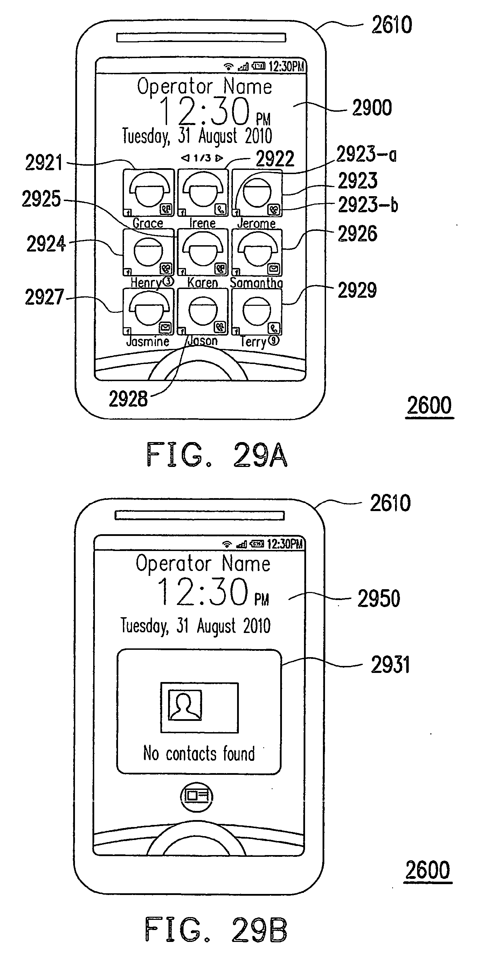

FIG. 29A is a schematic diagram of a background corresponding to a background setting style of contacts according to an embodiment of the invention. In case that the background setting style is set as the contacts style, the corresponding one or more display data include contacts information recorded in the local storage device of the electronic device 2600, which may be names and/or profile photos of the contacts, and various contact manners (for example, phone numbers, email boxes, joined community websites, personal web pages, and instant messaging accounts, etc.). For example, when the electronic device 2600 enters the user-interface lock state, contacts of a specific group are selected from all of the contacts, and the corresponding contact information is regarded as the display data to generate a background 2900 displayed on the screen 2610 when the electronic device 2600 is in the user-interface lock state. In detail, the template corresponding to the contact displays one or a plurality of contact information belonging to a specific group in the background 2900. As shown in FIG. 29A, profile photos 2921-2929 respectively represent 9 contacts belonging to a same specific group, and a tag at a lower left/right corner of each of the profile photos represents a contact manner. Taking the profile photo 2923 as an example, this contact has two contact manners, where a tag 2923-a represents that such contact uses a specific community website, and a tag 2923-b represents that such contact has a phone number.

In the embodiment of FIG. 29A, the template limits the background 2900 to simultaneously display 9 contacts, though the number of the contacts is not limited thereto, and in other embodiments, along with different templates, an upper limit of the number of the contacts displayed in the generated background may be different. For example, the other template only displays 2, 4, or 5 contacts in the background. However, if the number of the contacts in the specific group exceeds the upper limit of the number of the contacts displayed in one page of the background that is specified by the template, a plurality of pages of the backgrounds may be generated, and the number of the contacts in each page of the background does not exceed the upper limit of the number of the contacts. Further, when the electronic device 2600 receives an operation instruction from the user, the electronic device 2600 switches an up/down page of the backgrounds to display different contact information.

Moreover, when the specific group selected by the user does not exist or the specific group does not include any contact, it represents that none contact information is obtained to serve as the display data. Now, the generated background is shown as a background 2950 of FIG. 29B. In detail, the background 2950 includes an error message 2931 to notify the user the above situation.

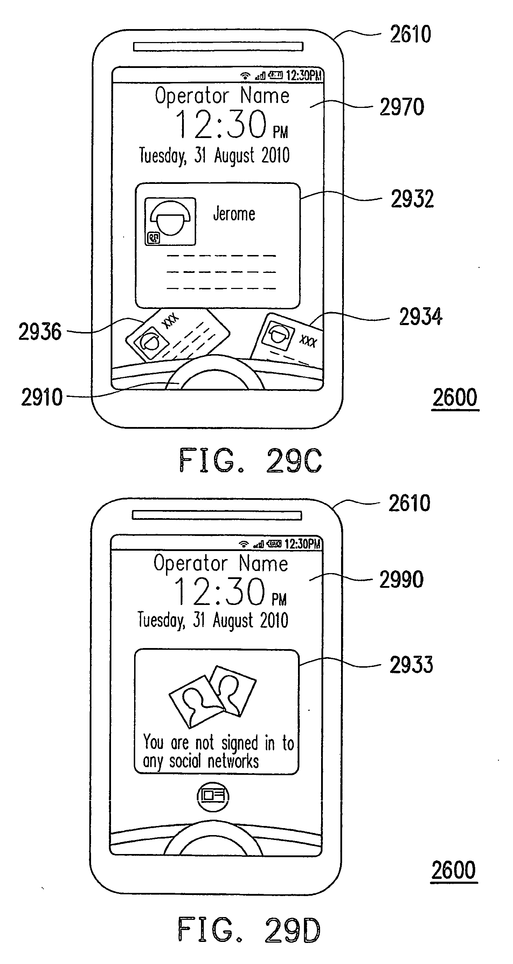

FIG. 29C is a schematic diagram of a background corresponding to a background setting style of social network service according to an embodiment of the invention. In the present embodiment, a remote storage device (for example, a server) that provides a community website or a network service is logged on through a network according to user identification (ID) information (for example, user account or password) recorded in the electronic device 2600, and then the contacts information are obtained from the community website or the service webpage to serve as the display data. The obtained contacts information may be dynamic information (for example, photos, videos, texts, or links) shared to the community website or the service webpage by others. For example, shown as a background 2970 of FIG. 29C, the background 2970 includes three sets of contact information 2932, 2934 and 2936, and each contact information includes a representative picture and name of the contact, and a message content shared to the community website. During the user-interface lock state, the electronic device 2600 automatically accesses the remote storage device that provides the community website every a predetermined time, so as to obtain latest contact information to serve as the display data. Moreover, presenting manners such as display positions and sizes of all of the obtained contact information dynamically change as time changes, for example, the contact information 2932, 2934 and 2936 are automatically and alternately enlarged and displayed at the center of the screen 2610 clockwise. Besides, the electronic device 2600 can also switch the contact information 2932, 2934 and 2936 according to an operation instruction input by the user. In this way, even if the electronic device 2600 is in the user-interface lock state, the user can still check different contact information by inputting the operation instructions. In other words, when the electronic device 2600 is in the user-interface lock state, the user can still conveniently and opportunely view dynamic information on the community website through the background 2970 displayed on the screen 2610. Moreover, the user can drag any one of the contact information 2932, 2934 and 2936 down into the ring 400 and unlock directly to the source Social app.

However, if the electronic device 2600 does not record any user ID information, or the recorded user ID information cannot be used to logon the community website or the service webpage, the background displayed on the screen 2610 of the electronic device 2600 is shown as a background 48 of FIG. 29D, which includes an error message 2933 to notify the user the above situation.

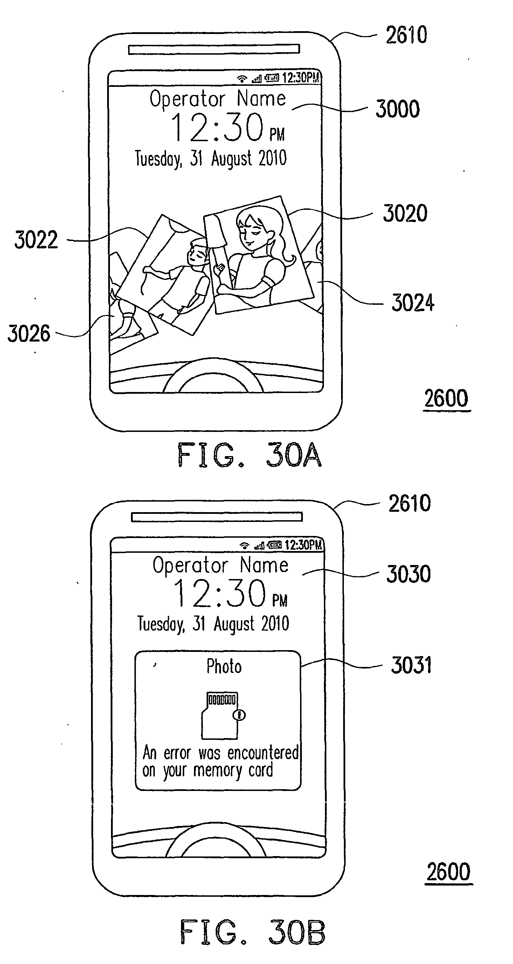

FIG. 30A is a schematic diagram of a background corresponding to a background setting style of gallery according to an embodiment of the invention. In the present embodiment, it is assumed that the user selects the gallery style as the background setting style. When the electronic device 2600 enters the user-interface lock state, the obtained one or more display data may include photos in a specific photo album. The specific photo album may be selected by the user when the electronic device 2600 is in the user-interface unlock state. The specific photo album may be a network photo album provided by a remote storage device (for example, a network storage space), and user ID information has to be used to log on the network photo album through a network, so as to obtain the photos stored therein. The specific photo album can also be a photo album in a local storage device (for example, a memory card) of the electronic device 2600. As shown in FIG. 30A, in the user-interface lock state, a background 3000 of the electronic device 2600 is generated according to a template of the gallery style and photos 3020, 3022, 3024 and 3026, though the number of the photos are not limited thereto.

In detail, in the present embodiment, a presenting manner of the photos 3020, 3022, 3024 and 3026 serving as the display data change as time changes. For example, when the photos 3020, 3022, 3024 and 3026 are display in form of slide, each of the photos automatically moves towards a specific direction. In other words, the presenting manner such as a size, a display position or clarity of each of the photos changes as time changes. In another embodiment, a moving direction of each of the photos also changes as time changes, so that the photos are displayed in form of the slide in different moving directions. It should be noticed that the invention is not limited to the display effect of the slide, and in other embodiments, the obtained photos may have different display effects as time changes.

Moreover, the user can also switch the obtained photos during the user-interface lock state of the electronic device 2600 by inputting an operation instruction. In this way, when the electronic device 2600 is in the user-interface lock state, the background 3000 may display different photos, and multiple display effects are presented during a switching process of the photos.

Moreover, when the electronic device 2600 cannot obtain the photos from the storage device to serve as the display data, the background displayed in the screen 2610 includes an error message to notify the user a reason why the photos cannot be obtained. For example, if the specific photo album selected by the user does not exist, or the specific photo album has no photo therein, the error message may include prompt message such as "No photos found, please select another photo album".

Further, as shown in FIG. 30B, it is assumed that the specific photo album is stored in the memory card (e.g., a SD card), and if the memory card is detected to be damaged when it is accessed, since the photos cannot be successfully obtained, an error message 3031 in a background 3030 is, for example, prompt message such as "An error was encountered on your memory card" to notify the user a reason of the error occurrence.

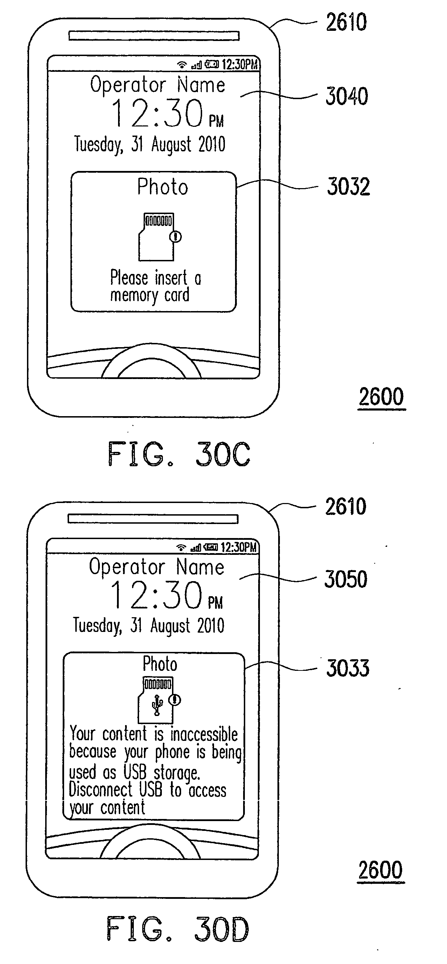

As shown in FIG. 30C, it is assumed that the specific photo album is stored in the memory card, and if the memory card cannot be detected when the photo stored therein are accessed, in order to inform the user to insert the memory card, an error message 3032 in a background 3040 is, for example, prompt message such as "Please insert a memory card".

In an embodiment, if the electronic device 2600 has a universal serial bus (USB) interface, the user can connect the electronic device 2600 to other devices through the USB interface for data accessing. Namely, the electronic device 2600 may be used as a flash drive. When the electronic device 2600 is in the user-interface lock state, if the electronic device 2600 is connected to the other device through the USB interface, the photos cannot be obtained from the local storage device of the electronic device 2600 for displaying. Now, the background is shown as a background 3050 of FIG. 30D, in which an error message 3033 is, for example, prompt message such as "Your content is inaccessible because your phone is being used as USB storage. Disconnect USB to access your content".

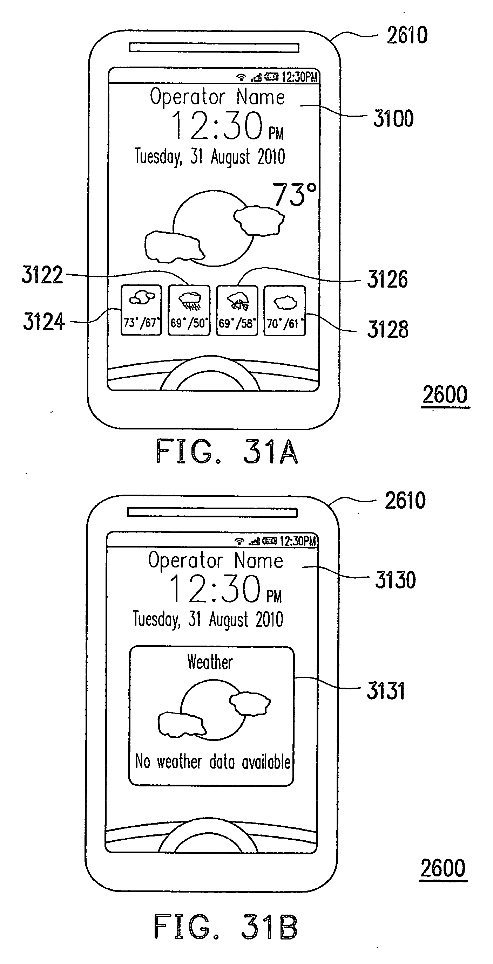

FIG. 31A is a schematic diagram of a background corresponding to a background setting style of weather information according to an embodiment of the invention. In the present embodiment, it is assumed that the user selects the weather information style as the background setting style. When the electronic device 2600 enters the user-interface lock state, the obtained one or more display data may include a current temperature, a weather status, a rain rate, a past weather report, a future weather forecast, etc. The electronic device 2600 may be connected to a weather report release center through the network to obtain a content of the latest weather information, and displays the obtained display data according to a template of the weather information. The electronic device 2600 obtains the latest weather information to serve as the display data every a predetermined time, and opportunely displays the display data on a background 3100. In the present embodiment, the template displays today's temperature and weather status in the center of the background 3100, and displays the weather information of future several days (for example, four days, though the invention is not limited thereto) at a lower part of the background 3100 by icons 3122, 3124, 3126 and 3128, though the template of the weather information is not limited thereto. In this way, even if the electronic device 2600 enters the user-interface lock state, the user can still directly obtain the dynamic whether information through the background 3100 of the electronic device 2600 at any time.

However, as shown in FIG. 31B, when the electronic device 2600 cannot obtain the content of the weather report from the weather report release center (for example, the electronic device 2600 cannot obtain the content of the weather report through the network or according to a date or an area selected by the user), a background 3130 displays an error message 3131 to notify the user, where the error message 3131 is, for example, prompt message such as "No weather data available".

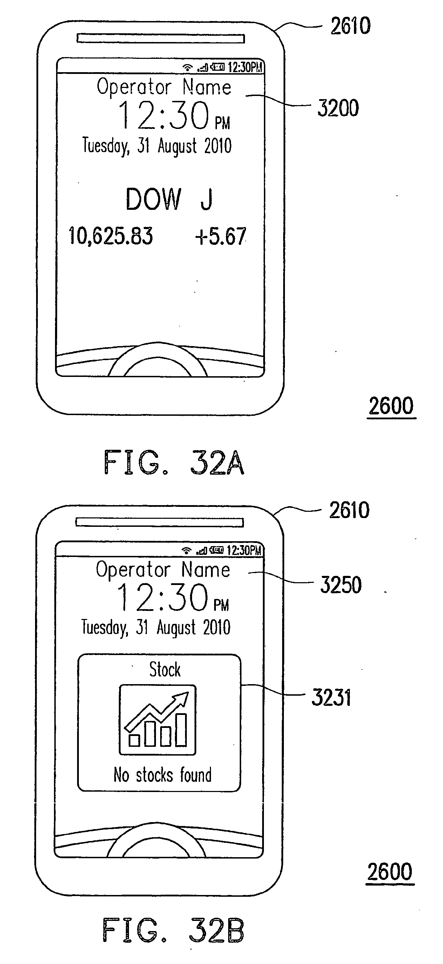

FIG. 32A is a schematic diagram of a background corresponding to a background setting style of stock information according to an embodiment of the invention. In the present embodiment, it is assumed that the user selects the stock information style as the background setting style. When the electronic device 2600 enters the user-interface lock state, the obtained one or more display data may include stock names/codes pre-selected by the user and the corresponding stock prices, etc., and the background generated according to the template is shown as a background 3200 of FIG. 32A. The electronic device 2600 may be connected to a stock release center through the network to obtain a latest stock content, and displays the obtained display data according to a template of the stock information. In an embodiment, as the stock price goes up and down, the corresponding stock name moves towards different directions. For example, when the stock price goes up, the stock name moves upwards, and vice versa. The electronic device obtains the latest stock information every a predetermined time, and accordingly updates a content of a background 3200. In this way, even if the electronic device 2600 enters the user-interface lock state, the user can still directly obtain the dynamic stock information through the screen 2610 of the electronic device 2600 at any time.

However, when the electronic device 2600 cannot obtain the latest stock information from the stock release center, the generated background is shown as a background 3250 of FIG. 32B, and the background 3250 displays an error message 3231 of "No stocks found".

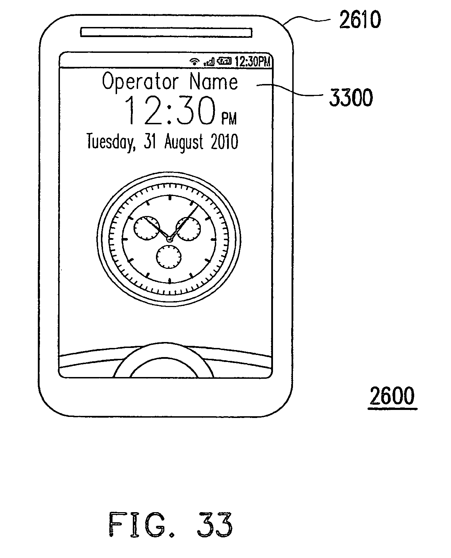

FIG. 33 is a schematic diagram of a background corresponding to a background setting style of virtual clock according to an embodiment of the invention. In the present embodiment, it is assumed that the user selects the virtual clock style as the background setting style. The obtained display data may include time, date and appearance setting of the virtual clock. The appearance setting of the virtual clock includes various different digital clocks and analog clocks, which may be selected by the user when the electronic device 2600 is in the user-interface unlock state. The background generated according to the template is shown as a background 3300 of FIG. 33. In the present embodiment, the template displays the virtual clock at the center of the background 3300. It should be noticed that the background 3300 may provide a three-dimensional (3D) display effect, and present a vivid 3D virtual clock along with movement of the electronic device 2600.

In the following embodiment, the user can define a contact group for a background corresponding to a background setting style of contacts in settings. A contact image of at least one contact in the group will be displayed on the background of the electronic device when it is in the user-interface lock state. On each contact image, a default action icon of a default action corresponding to the contact is shown if the default action is defined for the contact. However, if the contact is not corresponding to any default action, only the contact image of the contact will be displayed.

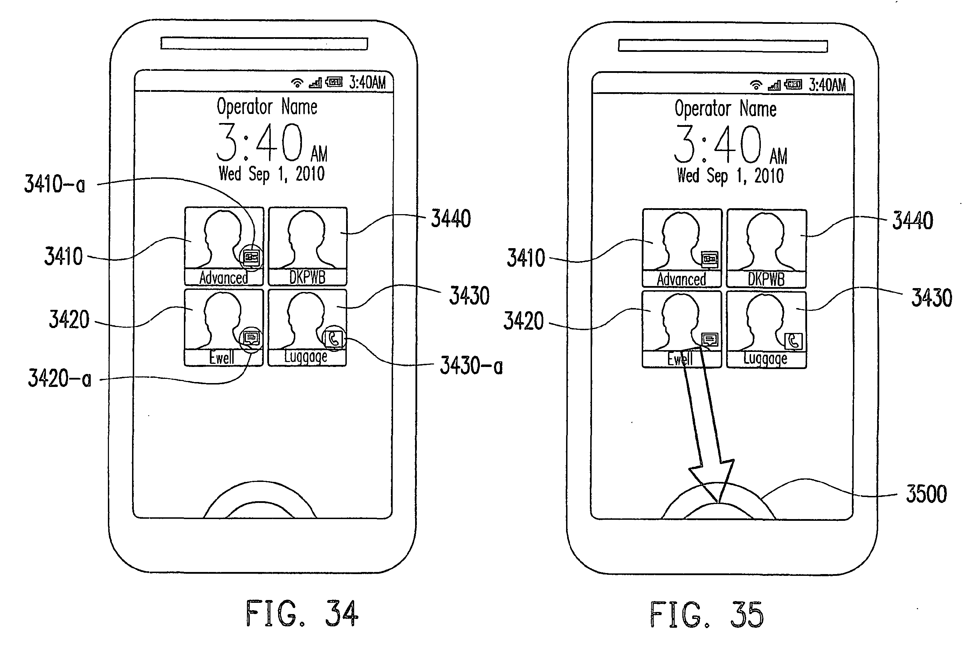

Fig. 34 is a schematic diagram of a background corresponding to the background setting style of contacts according to an embodiment of the invention. In Fig. 34, a contact group of four contacts is selected to generate the background corresponding to the background setting style of contacts. However, the number of contacts in the selected group is not limited. In this embodiment, at most 9 contacts can be displayed in a page of the background corresponding to the background setting style of contacts. That is, it can have different layouts for 1-9 contacts, and if the selected group has more than 9 contacts, the user may scroll to next or pervious page to see other contacts in the group. In this embodiment, a default action has been set to each of the contacts corresponding to the upper-left contact image 3410, the lower-left contact image 3420, and the lower-light contact image 3430, the default action icon representing each default action is respectively shown in the circles 3410-a, 3420-a and 3430-a. In this embodiment, no default action has been set to the contact corresponding to the upper-right contact image 3440, so there is no additional default action icon on the contact image 3440.

The default action of each contact may be making a phone call, sending a short message, sending an e-mail, or viewing the details of the contact. However, the default action is not limited therein.

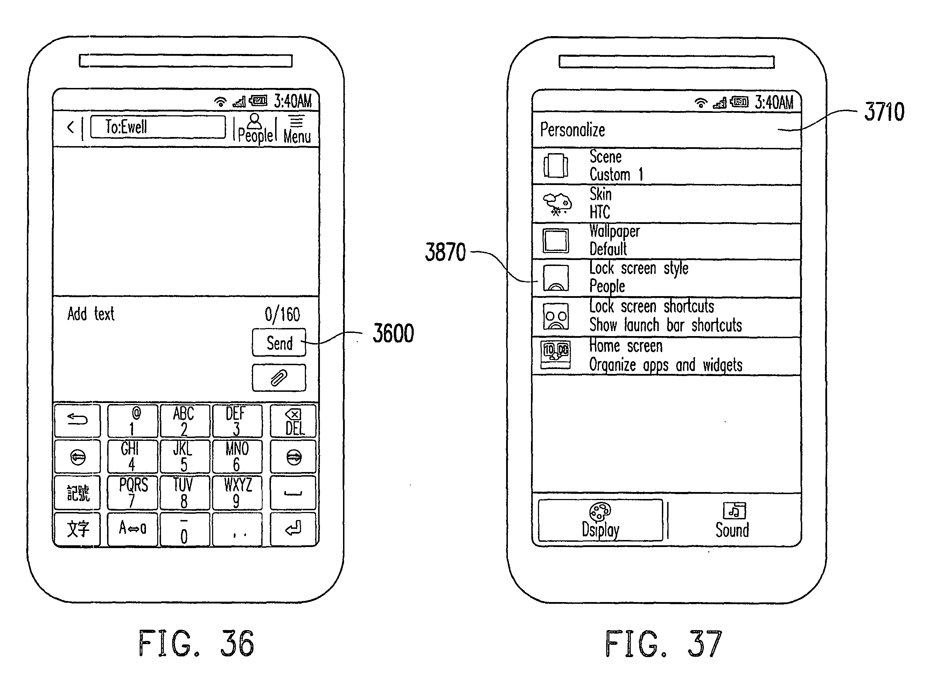

It is assumed that the default action set to the contact corresponding to the lower-left contact image 3420 is sending a short message. As shown in Fig. 35, while the user drags the lower-left contact image 3420 into the ring 3500, the electronic device is unlocked and the user interface of the SMS application is launched for the user to edit the message as shown in Fig. 36. Referring to Fig. 36, the user may edit the message, attach a file, and send the message by press the button 3600.

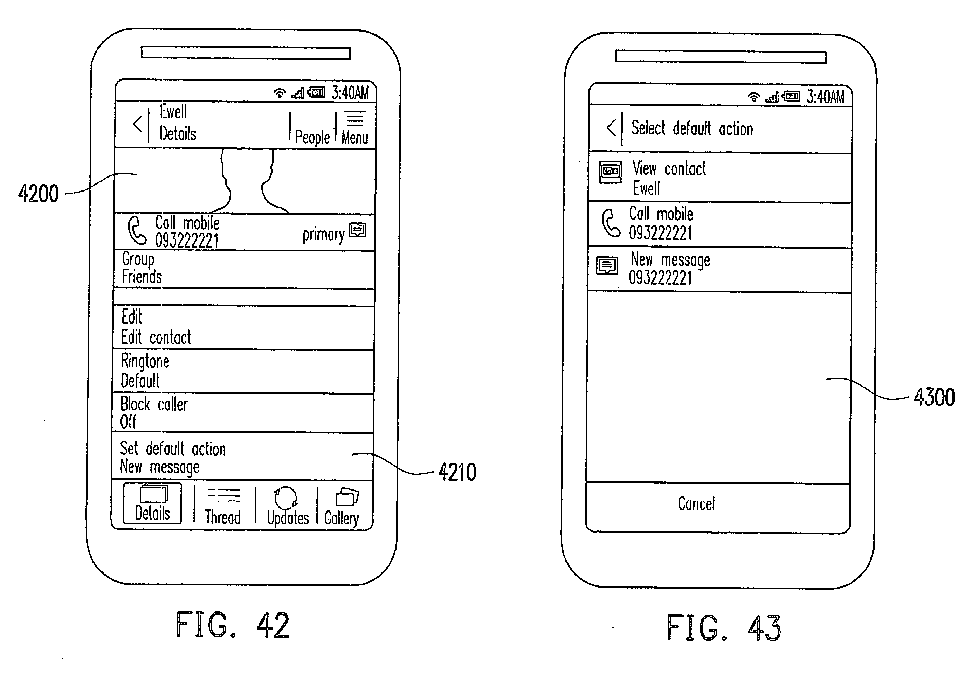

As long as the default action is set to the contact and the group containing the contact is selected for generating the background corresponding to the background setting style of contacts, the user can drag the contact image of the contact into the ring to unlock the locked device and launch the default action directly. If the user drag a contact image of a contact that has not been set to any default action (e.g., the contact corresponding to the upper-right contact image 3440 as shown in Fig. 35), a action define screen (e.g., the default action setting screen 4300 as shown in Fig. 43) for user selection will be displayed after the contact image is dragged into the ring 3500. If the user assign a default action to the contact through the action define screen, next time when the electronic device enters the user-interface lock state, a default action icon of the assigned default action will be displayed along with the contact image of the contact. Alternatively, a system pre-defined default action will be launched if the user drags the contact image of a contact without default action into the ring. That is, the system pre-defined default action is assigned to the contact without any user selected default action, and a pre-defined default action icon corresponding to the system pre-defined default action is displayed on the contact image of the contact.

It should be noted that the user may select one or more contacts from the contacts list instead of selecting a group to generate the background corresponding to the background setting style of contacts.

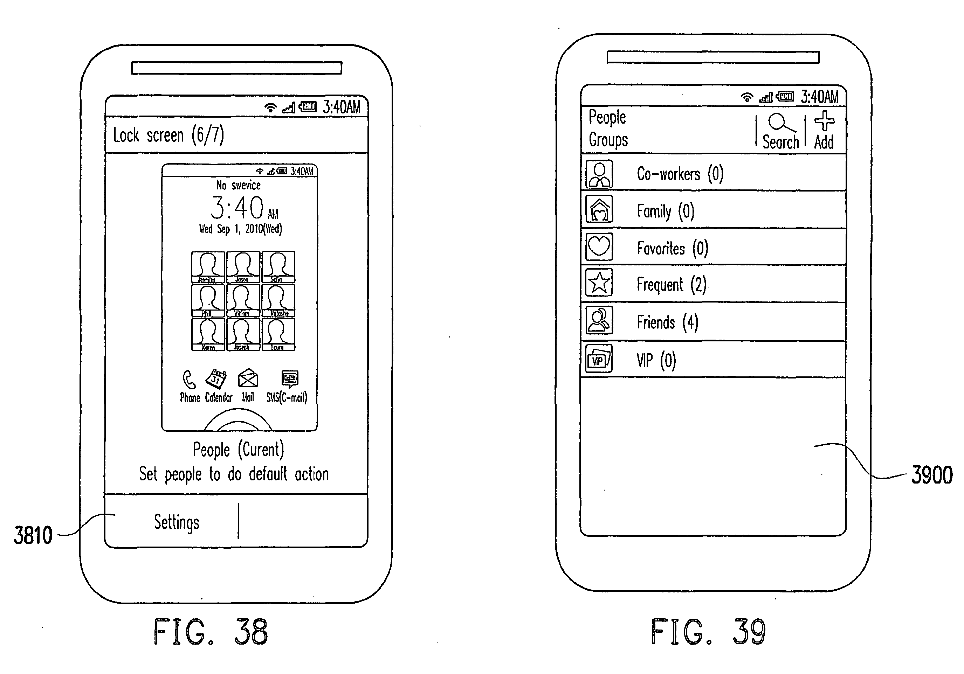

Following is the related setting about the background corresponding to the background setting style of contacts. As shown in Fig. 37, if the user selects a option 3870 in the personalized menu 3710, the electronic device displays a lock screen preview as shown in Fig. 38. If the user press the "Setting" button 3810, the group selection screen 3900 as shown in Fig. 39 is launched. Then, the user may select any group displayed on the group selection screen 3900, such as the "Friends" group.

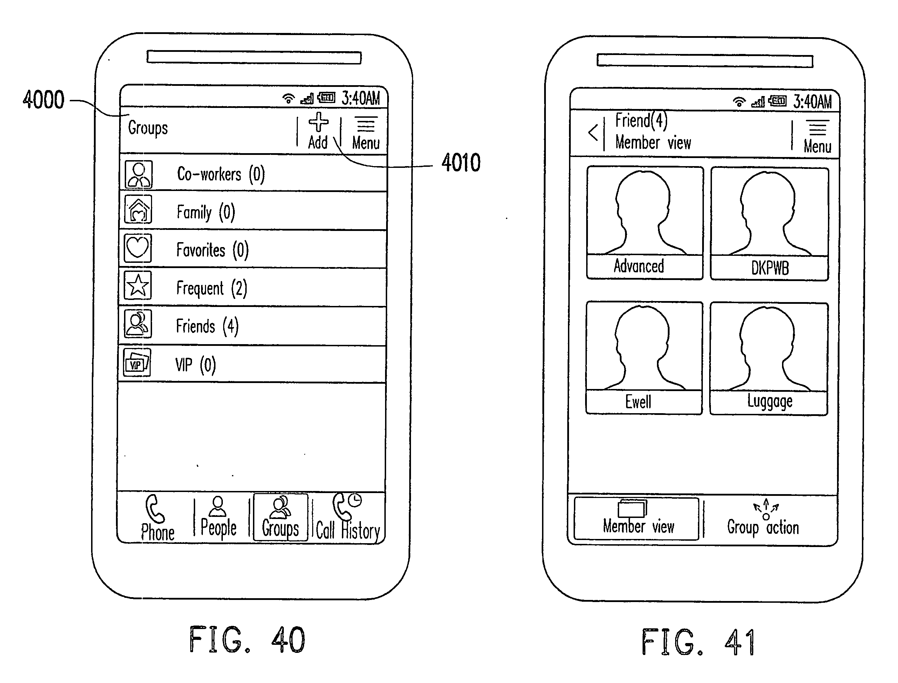

In one embodiment, as shown in Fig. 40, the user may add a new group by pressing the button 4010 in the toolbar 4000. Select one group in the group list to check the contacts in that group. The contacts list is shown in Fig. 41. The user can tap on each contact in the contacts list to view the contact card.

The contact card records the detail setting of each contact. As shown in Fig. 42, the name/contact image/phone number/group/ringtone and other settings are all displayed on the contact card 4200. The user can tap on the option 4210 to launch the default action setting screen 4300 as shown in Fig. 43. Then, the user may select one of the default actions to the contact.

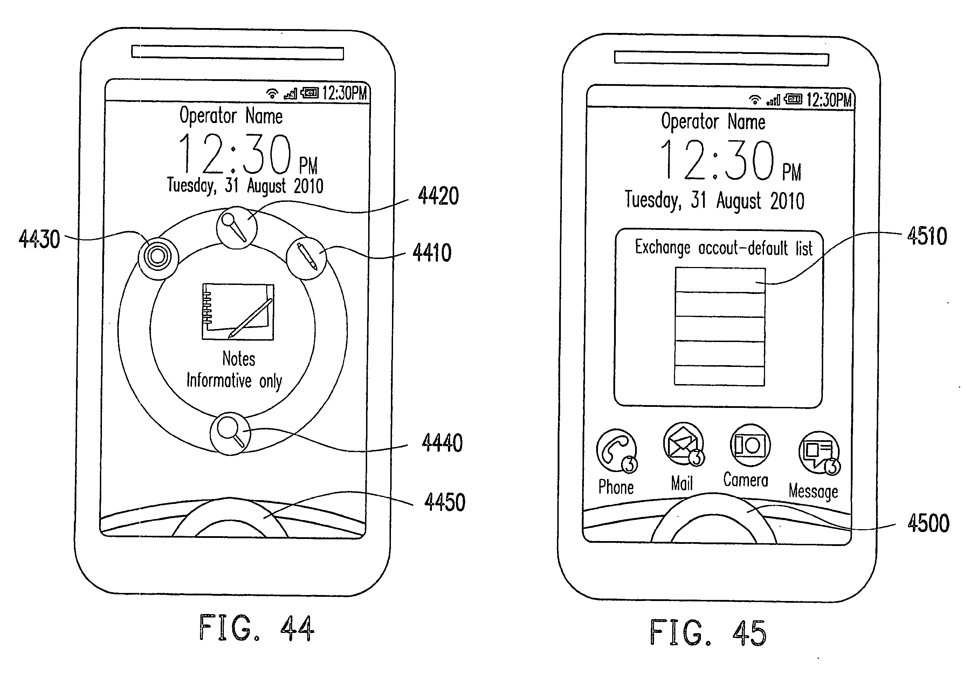

Fig. 44 is a schematic diagram of a background corresponding to the background setting style of note according to an embodiment of the invention. In this embodiment, while the electronic device is in the user-interface lock state, four function images 4410-4440 and at least a part of a ring 4450 are displayed on the screen of the electronic device. Each of the function images 4410-4440 is corresponding or related to a note taking function. For example, the function image 4410 is corresponding to a function of creating a note, the function image 4420 is corresponding to a function of creating a note and starting recording, the function image 4430 is corresponding to a function of opening a camera function for capturing a photo or video and adding the photo or video into the new note, and the function image 4440 is corresponding to a function of searching notes.

When the user needs to create a note while the electronic device is in the user-interface lock state, the user may touch one of the function images 4410-4430 with his/her finger and drags the touched function image into the ring 4450, then the note taking function corresponding to the function image dragged into the ring 4450 will be launched. For example, while the user drags the function image 4410 into the ring 4450, a screen for editing a new note and the software input panel (SIP) such as a software keyboard will be displayed. If the user drags the function image 4420 into the ring 4450, a microphone will be turned on to record audio and add the recorded voice code into the new note. Alternatively, if the user drags the function image 4430 into the ring 4450, the camera function will be launched for capturing a photo or video to be added into a new note. In another embodiment, the user may touch the ring 4450 and drag the ring 4450 to the function images 4410-4430 to launch the functions corresponding to the function images 4410-4430.

On the other hand, if the user needs to search for a existent note while the electronic device is in the user-interface lock state, the user may touch the function image 4440 with his/her finger and drags the function image 4440 into the ring 4450, then the screen for searching the note will be launched.

Fig. 45 is a schematic diagram of a background corresponding to the background setting style of task according to an embodiment of the invention. In this embodiment, a task list 4510 is displayed while the electronic device is in the user-interface lock state, wherein the maximum number of tasks that can be shown in the task list 4510 is, for example, 10. When the number of tasks is more than the maximum number of tasks can be displayed on the task list 4510, a notification is shown at the bottom of the task list 4510. However, the user has to unlock the electronic device to see the remaining tasks.

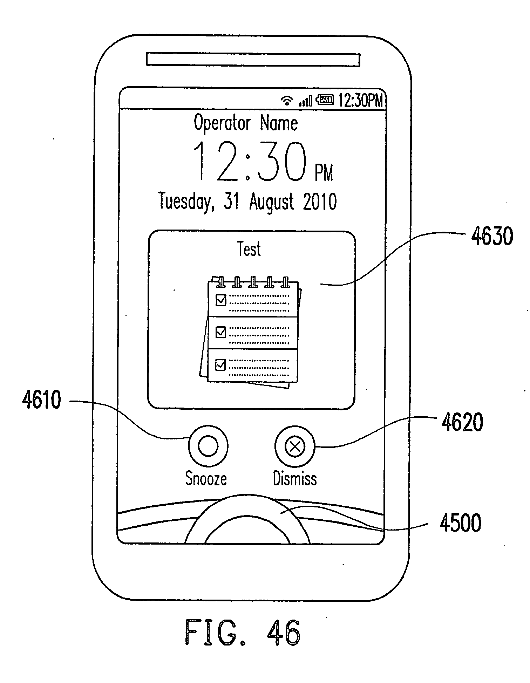

As shown in Fig. 46, when the reminder 4630 of one of the tasks is activated, two function images 4610 and 4620 are invoked accordingly. The user may snooze or dismiss the task reminder by dragging the related function image 4610 or 4620 into the ring 4500 or by dragging the ring 4500 to the related function images 4610 or 4620.

An embodiment of the invention provides a computer program product, in which the computer program product comprises a computer readable storage medium and an executable computer program mechanism embedded therein. After the computer program mechanism is executed by an electronic device having a screen, the electronic device can achieve the effects illustrated in the afore-described embodiments. The computer readable storage medium may be a read only memory, a random access memory, a magnetic tape, a floppy disk, a hard disk, an optical disk, or a transmission medium, etc. Alternatively, the computer program product may be directly provided through a network transmission, which is not to be limited by invention herein.

## Claims

1. A synchronization method of an electronic device (700) with a touch screen (710), comprising :
displaying a first shortcut icon (2010, 2020, 2030) corresponding to a first application on a launch bar (2040) on the touch screen (710) in response to a first drag operation detected on the first shortcut icon (2010, 2020, 2030) being moved to the launch bar (2040) while the electronic device (700) is in a user-interface unlock state;
in response to the first shortcut icon (2010, 2020, 2030) being moved to the launch bar (2040), displaying (S4720) a first function image (2110, 2120,2130) of the first shortcut icon (2010, 2020, 2030) corresponding to the first application on the touch screen (710) after the electronic device (700) enters a user-interface lock state from the user-interface unlock state; and
in response to a second drag operation associated with the first function image of the first shortcut icon when the electronic device is in the user-interface lock state, launching the first application.

2. The method as claimed in claim 1, wherein the first application is predefined in the electronic device (700).

3. The method as claimed in claim 1, wherein the first application is selected by a user.

4. The method as claimed in any one of claims 1 to 3, wherein the first shortcut icon (2010, 2020, 2030) is visually different from the first function image (2110, 2120,2130) of the first shortcut icon (2010, 2020, 2030).

5. The method as claimed in any one of claims 1 to 4, further comprising:
displaying a shortcut folder (2460) including a plurality of shortcut icons (2440, 2450) corresponding to a plurality of applications on the launch bar (2040) on the touch screen (710) while the electronic device (700) is in the user-interface unlock state; and
displaying a function image (2560) of the shortcut folder (2460) corresponding to the plurality of applications on the touch screen (710) while the electronic device (700) is in the user-interface lock state.

6. The method as claimed in claim 5, wherein the shortcut folder (2460) is visually different from the function image (2560) of the shortcut folder (2460).

7. The method as claimed in any one of claims 1 to 6, further comprising:
displaying a second shortcut icon (2210) corresponding to a second application on the launch bar (2040) on the touch screen (710) while the electronic device (700) is in the user-interface unlock state; and
displaying a second function image (2340) of the second shortcut icon (2210) corresponding to the second application on the touch screen (710) while the electronic device (700) is in the user-interface lock state.

8. An electronic device (700), comprising:
a touch screen (710);
a memory (720);
one or more processing units (730); and
one or more programs (725), wherein the one or more programs (725) are stored in the memory (720) and configured to be executed by the one or more processing units (730), the one or more programs including instructions:
to display a first shortcut icon (2010, 2020, 2030) corresponding to a first application on a launch bar (2040) on the touch screen (710) in response to a first drag operation detected on the first shortcut icon (2010, 2020, 2030) being moved to the launch bar (2040) while the electronic device (700) is in a user-interface unlock state; in response to the first shortcut icon (2010, 2020, 2030) being moved to the launch bar (2040), to display a first function image (2110, 2120, 2130) of the first shortcut icon (2010, 2020,2030) corresponding to the first application on the touch screen (710) after the electronic device (700) enters a user-interface lock state from the user-interface unlock state; and
to launch the first application in response to a second drag operation associated with the first function image of the first shortcut icon when the electronic device is in the user-interfacce lock state.

9. The electronic device (700) as claimed in claim 8, wherein the first application is predefined in the electronic device (700).

10. The electronic device (700) as claimed in claim 8, wherein the first application is selected by a user.

11. The electronic device (700) as claimed in any one of claims 8 to 10, wherein the first shortcut icon (2010, 2020, 2030) is visually different from the first function image (2110, 2120,2130) of the first shortcut icon (2010, 2020,2030).

12. The electronic device (700) as claimed in any one of claims 8 to 11, wherein the one or more programs including instructions:
to display a shortcut folder (2460) including a plurality of shortcut icons (2440, 2450) corresponding to a plurality of applications on the launch bar (2040) on the touch screen (710) while the electronic device (700) is in the user-interface unlock state; and
to display a function image (2560) of the shortcut folder (2460) corresponding to the plurality of applications on the touch screen (710) while the electronic device (700) is in the user-interface lock state.

13. The electronic device (700) as claimed in claim 12, wherein the shortcut folder (2460) is visually different from the function image (2560) of the shortcut folder (2460).

14. The electronic device (700) as claimed in any one of claims 8 to 13, wherein the one or more programs including instructions:
to display a second shortcut icon (2210) corresponding to a second application on the launch bar (2040) on the touch screen (710) while the electronic device (700) is in the user-interface unlock state; and
to display a second function image (2340) of the second shortcut icon (2210) corresponding to the second application on the touch screen (710) while the electronic device (700) is in the user-interface lock state.

15. A computer program product for use in conjunction with an electronic device (700) comprising a touch screen (710), comprising a computer readable storage medium and an executable computer program mechanism embedded therein for performing the synchronization method of an electronic device (700) according to any one of claims 1 to 7.

## Patentansprüche

1. Synchronisationsverfahren einer elektronischen Vorrichtung (700) mit einem Berührungsbildschirm (710), umfassend:
Anzeigen eines ersten Shortcut-Verknüpfungssymbols (2010, 2020, 2030), das zu einer ersten Anwendung auf einer Startleiste (2040) auf dem Berührungsbildschirm (710) gehört, in Reaktion auf eine erste Drag-Betätigung, die an dem ersten Shortcut-Verknüpfungssymbol (2010, 2020, 2030) erkannt wird als Bewegung zu der Startleiste (2040) während die elektronische Vorrichtung (700) sich in einem Benutzerschnittstellen-Entriegelungs-Zustand befmdet;
in Reaktion auf die Bewegung des ersten Shortcut- Verknüpfungssymbols (2010, 2020, 2030) zu der Startleiste (2040), Anzeigen (S4720) eines ersten Funktionsbildes (2110, 2120, 2130) des ersten Shortcut-Verknüpfungssymbols (2010, 2020,2030) entsprechend der ersten Anwendung auf dem Berührungsbildschirm (710), nachdem die elektronische Vorrichtung (700) in einen Benutzerschnittstellen-Verriegelungs-Zustand eintritt ausgehend von dem Benutzerschnittstellen-Entriegelungs-Zustand; und
in Reaktion auf eine zweite Drag-Betätigung, die mit dem ersten Funktionsbild zusammenhängt, wenn die elektronische Vorrichtung sich in dem Benutzerschnittstellen-Verriegelungs-Zustand befindet, dann Starten der ersten Anwendung.

2. Verfahren nach Anspruch 1, wobei die erste Anwendung in der elektronischen Vorrichtung (700) vorgegeben ist.

3. Verfahren nach Anspruch 1, wobei die erste Anwendung durch einen Benutzer ausgewählt wird.

4. Verfahren nach einem der Ansprüche 1 bis 3, wobei das erste Shortcut-Verknüpfungssymbol (2010, 2020, 2030) visuell verschieden von dem ersten Funktionsbild (2110, 2120, 2130) des ersten Shortcut-Verknüpfungssymbol (2010,2020, 2030) ist.

5. Verfahren nach einem der Ansprüche 1 bis 4, ferner umfassend:
Anzeigen eines Shortcut-Verknüpfungsordners (2460), der eine Vielzahl von Shortcut-Verknüpfungssymbolen (2440, 2450) enthält, die zu einer Vielzahl von Anwendungen in der Startleiste (2040) auf dem Bcrührungsbildschirm (710) gehören, während das elektronische Vorrichtung (700) sich in dem Benutzerschnittstellen-Entriegelungs-Zustand befindet; und
Anzeigen eines Funktionsbildes (2560) des Verknüpfungsordner (2460) entsprechend der Vielzahl von Anwendungen auf dem Berührungsbildschirm (710), während die elektronische Vorrichtung (700) sich in dem Benutzerschnittstellen-Verriegelungs-Zustand befindet.

6. Verfahren nach Anspruch 5, wobei der Shortcut-Verknüpfungsordner (2460) visuell verschieden von dem Funktionsbild (2560) des Shortcut-Verknüpfungsordners (2460) ist.

7. Verfahren nach einem der Ansprüche 1 bis 6, ferner umfassend:
Anzeigen eines zweiten Shortcut-Verknüpfungssymbols (2210), das zu einer zweiten Anwendung auf der Startleiste (2040) auf dem Berührungsbildschirm (710) gehört, während die elektronische Vorrichtung (700) sich in dem Benutzerschnittstellen- Entriegelungs-Zustand befindet; und
Anzeigen eines zweiten Funktionsbildes (2340) des zweiten Shortcut-Verknüpfungssymbols (2210) entsprechend der zweiten Anwendung auf dem Berührungsbildschirm (710), während die elektronische Vorrichtung (700) sich in dem Benutzerschnittstellen- Verriegelungs-Zustand befindet.

8. Elektronische Vorrichtung (700), umfassend:
einen Berührungsbildschirm (710);
einen Speicher (720);
eine oder mehrere Verarbeitungseinheiten (730); und
ein oder mehrere Programme (725), wobei die ein oder mehreren Programme (725) in dem Speicher (720) gespeichert und konfiguriert sind, um durch die eine oder mehreren Verarbeitungseinheiten (730) ausgeführt zu werden,
wobei die ein oder mehreren Programme Anweisungen enthalten:
zum Anzeigen eines ersten Shortcut-Verknüpfungssymbols (2010, 2020, 2030), das zu einer ersten Anwendung auf einer Startleiste (2040) auf dem Berührungsbildschirm (710) gehört, in Reaktion auf eine erste Drag-Betätigung, die an dem ersten Shortcut-Verknüpfungssymbol (2010, 2020, 2030) erkannt wird als Bewegung zu der Startleiste (2040) während die elektronische Vorrichtung (700) sich in einem Benutzerschnittstellen-Entriegelungs-Zustand befindet; ferner in Reaktion auf die Bewegung des ersten Shortcut- Verknüpfungssymbols (2010, 2020, 2030) zu der Startleiste (2040), zum Anzeigen (S4720) eines ersten Funktionsbildes (2110, 2120, 2130) des ersten Shortcut-Verknüpfungssymbols (2010, 2020, 2030) entsprechend der ersten Anwendung auf dem Berührungsbildschirm (710), nachdem die elektronische Vorrichtung (700) in einen Benutzerschnittstellen- Verriegelungs-Zustand eintritt ausgehend von dem Benutzerschnittstellen- Entriegelungs-Zustand; und
zum Starten der ersten Anwendung in Reaktion auf eine zweite Drag-Betätigung, die mit dem ersten Funktionsbild zusammenhängt, wenn die elektronische Vorrichtung sich in dem Benutzezschnittstellen-Verriegelungs-Zustand befindet.

9. Elektronische Vorrichtung (700) nach Anspruch 8, wobei die erste Anwendung in der elektronischen Vorrichtung (700) vorgegeben ist.

10. Elektronische Vorrichtung (700) nach Anspruch 8, wobei die erste Anwendung durch einen Benutzer ausgewählt wird.

11. Elektronische Vorrichtung (700) nach einem der Ansprüche 8 bis 10, wobei das erste Shortcut-Verknüpfungssymbol (2010, 2020, 2030) visuell verschieden von dem ersten Funktionsbild (2110 2120, 2130) des ersten Shortcut-Verknüpfungssymbols (2010, 2020, 2030) ist.

12. Elektronische Vorrichtung (700) nach einem der Ansprüche 8 bis 11, wobei die ein oder mehrere Programme Anweisungen umfassen:
zum Anzeigen eines Verknüpfungsordners (2460), der eine Vielzahl von Shortcut-Verknüpfungssymbolen (2440, 2450) enthält, die zu einer Vielzahl von Anwendungen in der Startleiste (2040) auf dem Berührungsbildschirm (710) gehören, während die elektronische Vorrichtung (700) sich in dem Benutzerschnittstellen- Entriegelungs-Zustand befindet; und
zum Anzeigen eines Funktionsbildes (2560) des Verknüpfungsordners (2460) entsprechend der Vielzahl von Anwendungen auf dem Berührungsbildschirm (710), während das elektronische Vorrichtung (700) sich in dem Benutzerschnittstellen- Verriegelungs-Zustand befindet.

13. Elektronische Vorrichtung (700) nach Anspruch 12, bei dem der Verknüpfungsordner (2460) sich visuell unterscheidet von dem Funktionsbild (2560) des Verknüpfungsordner (2460).

14. Elektronische Vorrichtung (700) nach einem der Ansprüche 8 bis 13, wobei das eine oder mehrere Programme Anweisungen enthalten:
zum Anzeigen eines zweiten Shortcut-Verknüpfungssymbols (2210) entsprechend einer zweiten Anwendung in der Startleiste (2040) auf dem Berührungsbildschirm (710), während das elektronische Vorrichtung (700) sich in dem Benutzerschnittstellen- Entriegelungs-Zustand befindet; und ...zum Anzeigen eines zweiten Funktionsbildes (2340) des zweiten Shortcut-Verknüpfungssymbols (2210) entsprechend der zweiten Anwendung auf dem Berührungsbildschirm (710), während das elektronische Vorrichtung (700) sich in dem Benutzerschnittstellen- Verriegelungs-Zustand befindet.

15. Computerprogrammprodukt zur Verwendung in Verbindung mit einer elektronischen Vorrichtung (700) umfassend einen Berührungsbildschirm (710), umfassend ein computerlesbares Speichermedium und einen ausführbaren Computerprogrammmechanismus, der darin eingebettet ist zum Durchführen des Synchronisationsverfahren für eine elektronische Vorrichtung (700) nach einem der Ansprüche 1 bis 7.

## Revendications

1. Une méthode de synchronisation d'un dispositif électronique (700) doté d'un écran tactile (710), comprenant :
l'affichage sur l'écran tactile (710) d'une première icône de raccourci (2010, 2020, 3030) correspondant à une première application sur une barre de lancement (204) en réponse à une première opération de déplacement détectée sur la première icône de raccourci (2010, 2020, 2030) déplacée sur la barre de lancement (2040) alors que le dispositif électronique (700) est dans un état de déverrouillage de l'interface utilisateur ;
en réponse au déplacement de la première icône de raccourci (2010, 2020, 2030) sur la barre de lancement (2040), l'affichage (S4720) d'une première image de fonction (2110, 2120, 2130) de la première icône de raccourci (2010, 2020, 2030) correspondant à la première application sur l'écran tactile (710) après que le dispositif électronique (700) soit entré dans un état de verrouillage de l'interface utilisateur depuis l'état de déverrouillage de l'interface utilisateur ; et
le lancement de la première application en réponse à une seconde opération de déplacement associée à la première image de fonction de la première icône de raccourci alors que le dispositif électronique est dans un état de verrouillage de l'interface utilisateur.

2. La méthode telle que revendiquée dans la revendication 1, dans laquelle la première application est prédéfinie au sein du dispositif électronique (700).

3. La méthode telle que revendiquée dans la revendication 1, dans laquelle la première application est sélectionnée par un utilisateur.

4. La méthode telle que revendiquée dans l'une quelconque des revendications 1 à 3, dans laquelle la première icône de raccourci (2010, 2020, 2030) est visuellement distincte de la première image de fonction (2110, 2120, 2130) de la première icône de raccourci (2010, 2020, 2030).

5. La méthode telle que revendiquée dans l'une quelconque des revendications 1 à 4, comprenant en outre :
l'affichage d'un dossier de raccourcis (2460) comprenant une pluralité d'icônes de raccourcis (2440, 2450) correspondant à une pluralité d'applications sur la barre de lancement (2040) sur l'écran tactile (710) alors que le dispositif électronique (700 est dans un état de déverrouillage de l'interface utilisateur ; et
l'affichage d'une image de fonction (2560) du dossier de raccourcis (2460) correspondant à la pluralité des applications sur l'écran tactile (710) alors que le dispositif électronique (700) est dans un état de verrouillage de l'interface utilisateur.

6. La méthode telle que revendiquée dans la revendication 5, dans laquelle le dossier de raccourcis (2460) est visuellement différent de l'image de fonction (2560) du dossier de raccourcis (2460).

7. La méthode telle que revendiquée dans l'une quelconque des revendications 1 à 6, comprenant en outre :
l'affichage d'une seconde icône de raccourci (2210) correspondant à une seconde application sur la barre de lancement (2040) sur l'écran tactile (710) alors que le dispositif électronique (700) est dans un état de déverrouillage de l'interface utilisateur ; et
l'affichage d'une seconde fonction d'image (2340) de la seconde icône de raccourci (2210) correspondant à la seconde application sur l'écran tactile alors que le dispositif électronique (700) est dans un état de verrouillage de l'interface utilisateur.

8. Un dispositif électronique (700), comprenant :
un écran tactile (710) ;
une mémoire (720) ;
une ou plusieurs unités de traitement (730) ; et
un ou plusieurs programmes (725), dans lesquels le ou les programmes (725) sont stockées au sein d'une mémoire (720) et configurés pour être exécutés par la ou les unités de traitement (730), le ou les programmes comprenant des instructions :
pour afficher sur l'écran tactile (710) une première icône de raccourci (2010, 2020, 3030) correspondant à une première application sur une barre de lancement (204) en réponse à une première opération de déplacement détectée sur la première icône de raccourci (2010, 2020, 2030) déplacée sur la barre de lancement (2040) alors que le dispositif électronique (700) est dans un état de déverrouillage de l'interface utilisateur ;
pour afficher en réponse au déplacement de la première icône de raccourci (2010, 2020, 2030) sur la barre de lancement (2040), une première image de fonction (2110, 2120, 2130) de la première icône de raccourci (2010, 2020, 2030) correspondant à la première application sur l'écran tactile (710) après que le dispositif électronique (700) soit entré dans un état de verrouillage de l'interface utilisateur depuis l'état de déverrouillage de l'interface utilisateur ; et
pour lancer la première application en réponse à une seconde opération de déplacement associée à la première image de fonction de la première icône de raccourci alors que le dispositif électronique est dans un état de verrouillage de l'interface utilisateur.

9. Le dispositif électronique (700) tel que revendiqué dans la revendication 8, dans lequel la première application est prédéfinie au sein du dispositif électronique (700).

10. Le dispositif électronique (700) tel que revendiqué dans la revendication 8, dans lequel la première application est sélectionnée par un utilisateur.

11. Le dispositif électronique (700) tel que revendiqué dans l'une quelconque des revendications 8 à 10, dans lequel la première icône de raccourci (2010, 2020, 2030) est visuellement distincte de la première image de fonction (2110, 2120, 2130) de la première icône de raccourci (2010, 2020, 2030).

12. Le dispositif électronique (700) tel que revendiqué dans l'une quelconque des revendications 811, dans lequel le ou les programmes comporte des instructions pour
afficher un dossier de raccourcis (2460) comprenant une pluralité d'icônes de raccourcis (2440, 2450) correspondant à une pluralité d'applications sur la barre de lancement (2040) sur l'écran tactile (710) alors que le dispositif électronique (700 est dans un état de déverrouillage de l'interface utilisateur ; et
afficher une image de fonction (2560) du dossier de raccourcis (2460) correspondant à la pluralité d'applications sur l'écran tactile (710) alors que le dispositif électronique (700) est dans un état de verrouillage de l'interface utilisateur.

13. Le dispositif électronique (700) tel que revendiqué dans la revendication 12, dans lequel le dossier de raccourcis (2460) est visuellement différent de l'image de fonction (2560) du dossier de raccourcis (2460).

14. Le dispositif électronique (700) tel que revendiqué dans l'une quelconque des revendications 8 à 13, dans lequel le ou les programmes comportent des instructions :
pour afficher une seconde icône de raccourci (2210) correspondant à une seconde application sur la barre de lancement (2040) sur l'écran tactile (710) alors que le dispositif électronique (700) est dans un état de déverrouillage de l'interface utilisateur ; et
pour afficher une seconde fonction d'image (2340) de la seconde icône de raccourci (2210) correspondant à la seconde application sur l'écran tactile alors que le dispositif électronique (700) est dans un état de verrouillage de l'interface utilisateur.

15. Un programme d'ordinateur destiné à être utilisé avec un dispositif électronique (700) comprenant un écran tactile (710), comprenant une mémoire de lecture et un programme d'ordinateur exécutable s'y trouvant pour la mise en oeuvre de la méthode de synchronisation d'un dispositif électronique (700) selon l'une quelconque des revendications 1 à 7.
